# EUROPEAN PATENT SPECIFICATION

(11) **EP 4 348 538 B1**
(45) Date of publication and mention of the grant of the patent: **30.07.2025**
(21) Application number: 22734353.0
(22) Date of filing: 25.05.2022
(51) Int. Cl.: G06Q 10/08, G06Q 10/10

(54) **OPERATIONS MANAGEMENT IN A WORKPLACE ENVIRONMENT**
BETRIEBSVERWALTUNG IN EINER ARBEITSPLATZUMGEBUNG
GESTION D'OPÉRATIONS DANS UN ENVIRONNEMENT DE LIEU DE TRAVAIL

(30) Priority: 25.05.2021 ZA 202103536
(43) Date of publication of application: 10.04.2024
(73) Proprietor: Stellenbosch University, Western Cape Province 7600 (ZA)
(72) Inventor: SPARROW, Dale Eric, Stellenbosch 7600 (ZA); KRUGER, Karel, Stellenbosch 7600 (ZA)
(74) Representative: Algemeen Octrooi- en Merkenbureau B.V.
(86) International application number: PCT/IB2022/054883
(87) International publication number: WO 2022/249082

(56) References cited:
- US-A1- 2018 081 791
- US-B2- 9 424 536

## Description

### FIELD OF THE INVENTION

This invention relates to operations management in a workplace environment incorporating human resources into an automated environment.

### BACKGROUND TO THE INVENTION

Current technologies exist for scheduling and project management, analysis and data mining, and review and quality assurance. Enterprise resource planning software incorporates key business functions of an organisation. For example, planning software tracks projects and traces costs, and offers tools for analysis and feedback from business components. Execution Management Systems automate and trigger actions from resources based on higher level goals of an organisation while Customer Relationship Management aids in linking finished products and services back to organisational decisions makers for improvements or support.

The known solutions sit at a very high level in business management and work as completely separated systems (i.e., operating in "silos"). These systems are also monolithic; meaning they consist of one massive computer program trying to micromanage many small components of an organisation.

At such a high level, these monolithic systems are out of touch with the executing resources at the lowest levels - data that higher level decisions makers need is not offered in real time and their resulting decisions struggle to realise through lower-level resources that need to execute these decisions. The channels of communication both from low level source to high level decision makers and back are tedious, prone to faults, and not robust to changes. This means that these systems cannot be reliably used to make shop floor decisions and do not naturally offer good traceability, interchangeability, agility, and scalability. Being so far removed, these systems exclude individual workers from the benefits of digital business management systems, effectively 'air gapping' the lower executing levels of an organisation.

Due to the separated nature of known systems, as well as their complexity, they cannot effectively work together on planning, execution, review, and analysis at all vertical levels of a business, and complete horizontal integration. To get these systems to work together often requires the aid of experts at a great cost. Small and medium sized enterprises (SMEs) cannot afford this, and it is overkill for many smaller operations.

In an organisational setting, managers and supervisors have to continuously monitor the execution of activities by workers and resources at lower levels, make decisions and give instructions on those decisions to assure quality and keeping to the production schedule - this "micro-management" is time consuming not because of their decision-making abilities, but due to the ineffective traceability and information channels. Similarly, lower-level resources often don't get feedback on work they have completed, due to the cost of this communication channel, and therefore cannot self-improve.

Messages in organisations are usually sent by emails, meetings or, recently, platforms such as Slack or Asana which has improved decision making and traceability for higher level strategic components of the organisation. Lower levels of the organisation, such as a factory shop floor, construction sites, warehouses etc. are usually less digitised and word-of-mouth or notice boards are used for communication to and from decision makers. These communication mechanisms are less agile, robust, and prone to mistakes with little to no traceability.

US 9,424,536 B2 discloses a system for business portfolio modelling and analysis. A system and method are disclosed for facilitating integrating enterprise data from multiple sources for display via in a common interface. An example method includes displaying, via a first user interface display screen, a first set of one or more personnel icons representative of one or more enterprise personnel, and providing a first user option to select one or more of the personnel icons. A second user interface display screen may be displayed in response to or after selection of one or more of the personnel icons. The second user interface display screen presents a first type of data. The second user interface display screen further provides a second user option to select one or more user interface features associated with the first type of data, and to then trigger display of a third user interface display screen. The third user interface display presents a second type of data that is associated with the first type of data

US 2018/0081791 A1 discloses a plugin for multi-module code coverage in web applications. Implementations generally relate to test coverage of multi-module code. In some implementations, a method includes testing, at a server, program code from a plurality of software modules of a process. The method further includes determining individual test coverage information for each software module of the process based on the testing of the program code for each software module, where the individual test coverage information includes individual test results for each software module and an individual test coverage value for each software module. The method further includes aggregating the individual test coverage information of the software modules. The method further includes determining overall test coverage information for the software modules, where the overall test coverage information is based on the aggregating of the individual test coverage information for the software modules.

The preceding discussion of the background to the invention is intended only to facilitate an understanding of the present invention. It should be appreciated that the discussion is not an acknowledgment or admission that any of the material referred to was part of the common general knowledge in the art as at the priority date of the application.

### SUMMARY OF THE INVENTION

According to an aspect of the present invention there is provided a computer-implemented system for operations management in a workplace environment incorporating human resources in an automated environment, comprising: a network of a plurality of modular shell components, wherein each shell component is configured to include data stores and to interface with plugin software components to autonomously manage data and decisions related to the operations of a resource or an activity in an automated environment, wherein: at least one of the shell components is configured for a human resource and the human-resource shell component provides activity scheduling and data management for a role of the human resource; at least one of the shell components is configured for a non-human resource for activity scheduling and data management of the non-human resource; and at least one of the shell components is configured for an activity to be carried out by a human resource or a non-human resource; and wherein each shell component includes a communication component to communicate with one or more other shell components to provide a scalable architecture.

Each shell component may read state data of the resource or activity it represents and may manage and control its own data. The scalable architecture may be an agent-based or an actor-based architecture. Each shell component represents the resource or activity in a digital space to provide a single accessible point of communication and collaboration for the resource or activity. Each shell component may be an individual software process that has a memory managed only by its individual software process and wherein each modular shell component runs in parallel with other modular shell components of the network and the modular shell components interact through messages.

Each shell component may be a self-contained functional unit customised from a generalised shell component for an application or context by the addition of plugin software components. The system may include one or more of the shell components configured to act as an orchestrating shell component coordinating other shell components in the network.

The communication component of a shell component may be configured with a standard set of interaction protocols for communication with other shell components, wherein the interaction protocols are capable of running concurrently. A human-resource shell component may interface with a human via user interfaces that are represented by non-human resource shell components.

According to another aspect of the present invention there is provided a shell component for operations management in a workplace environment incorporating human resources in an automated environment, comprising: a generalised set of core components configured to include data stores; interfaces for plugin software components customisable to a specific application by configuring interfacing behaviour between the core components; and a communications component for providing communication to external systems and other shell components, and internal communications between the core components of the shell component; wherein the shell component is configurable to be one of: a resource shell component for human resources providing activity scheduling and data management of a role of the human resource; a resource shell component for non-human system resources for activity scheduling and management of the resource; or an activity shell component for activities to be carried out by a human resource or a non-human resource.

The plugin software components may be configured to control operations of the shell component with operations generalised and integrated to the core components standardising communication with other shell components.

The core components may include: an attribute component for storing stable attribute data relating to the resource or activity; a schedule component for storing scheduling data relating to the future activities of the resource or activity; an execution component for storing volatile data relating to a current state of the resource or activity; and a biography component for storing data relating to past events of the resource or activity.

The plugin software components may be configured to control operations of the core components including: scheduling and management of activities in the schedule component; management of activity data and execution in the execution component; collection and management of post-execution data in the biography component; and analysis of biographic information to adjust attributes in the attribute component.

The plugin software components may include plugin types including: a scheduling plugin component to interface between the attribute component and the scheduling component; an execution plugin component to interface between the scheduling component and the execution component; a reflection plugin component to interface between the execution component and the biography component; and an analysis plugin component to interface between the biography component and the attribute component.

The attribute component may contain static information about a resource that is required for execution and scheduling decisions and is accessible to any of the plugin software components.

The shell component may be configured to provide a self-improvement feedback loop due to data flow between the core components.

A customised human-resource shell component may include: a delegation plugin component for communication and routine decision making on behalf of the human; an interface plugin component for interfacing between the digital and physical worlds to facilitate bidirectional communication; and a data processing and management plugin component for performing calculations and analysis on data obtained from the human and their surrounding environment. These plugins may be supported, performed, and/or executed by the plugin software component types discussed above.

A customised activity or non-human resource shell component may include: a scheduling plugin component that manages the activity or resource component's schedule; a communication plugin component to communicate and manage activities and actions; a collaboration plugin component to collaborate and interact with human resources through their shells as well as other activity or non-human shell components; and a data processing and management plugin component to process data related to activities and roles of the resource the shell represents. These plugins may be supported, performed, and/or executed by the plugin software component types discussed above.

According to another aspect of the present invention there is provided a computer-implemented method for operations management in a workplace environment incorporating human resources into an automated environment, comprising: providing a network of a plurality of modular shell components, wherein each shell component is configured to include data stores and to interface with plugin software components to autonomously manage data and decisions related to the operations of a resource or an activity in an automated environment, and wherein each shell component communicates with one or more other shell components to provide a scalable architecture, including: configuring at least one of the shell components for a human resource and the human-resource shell component provides activity scheduling and data management for a role of the human resource; configuring at least one of the shell components is configured for a non-human resource for activity scheduling and data management of the non-human resource; and configuring at least one of the shell components is configured for an activity to be carried out by a human resource or a non-human resource.

Each shell component may read state data of the resource or activity it represents and manages and controls its own data. The scalable architecture may be an agent-based or an actor-based architecture. Each shell component may represent the resource or activity in a digital space to provide a single accessible point of communication and collaboration for the resource or activity.

The method may include configuring one or more shell component to act as an orchestrating shell component coordinating other shell components in a workplace.

The method may include customising a generalised shell component to form of a self-contained functional unit for an application or context by using plugin software components to the generalised shell component, wherein the generalised shell component includes a generalised set of core components configured to be data stores for attribute data, scheduled data, present executing data, and past data.

Communicating between the shell components may use a standard set of interaction protocols that influence changes in scheduling and execution of actions between shell components to fulfil a service, wherein the interaction protocols are capable of running concurrently.

The method may include generating a data structure representing a contract during an activity containing details of a service that is being delivered by one shell component to another shell component, and wherein the data structure holds the resulting decisions and information related to the fulfilment of a service requested by one shell component from another and, wherein two shell components collaborate and communicate via interaction protocols that influence changes in a data structure representing a contract.

According to a further aspect of the present invention there is provided a computer-implemented method for customising a shell component for operations management in a workplace environment incorporating human resources into an automated environment, comprising: providing the shell component with a generalised set of core components configured to include data stores; applying interfacing plugin software components customisable to a specific application by configuring interfacing behaviour between the core components; and providing a communications component for providing communication to external systems and other shell components, and internal communications between the core components of the shell component; wherein the method configures the shell component to be one of: a resource shell component for human resources providing activity scheduling and data management of a role of the human resource; a resource shell component for non-human system resources for activity scheduling and management of the resource; or an activity shell component for activities to be carried out by a human resource or a non-human resource.

The method may include configuring the plugin software components to control operations of the shell component with operations generalised and integrated to the core components standardising communication with other shell components. The method may include storing data in the core components of stable and volatile data and past, present, and future data.

Configuring the plugin components to control operations of the core components may include: scheduling and management of activities; management of activity data and execution; collection and management of post-execution data; and analysis of biographic information to adjust attribute data or generate reports.

The method may include configuring the shell component to provide a self-improvement feedback loop due to data flow between the core components.

According to a further aspect of the present invention there is provided a computer program product for operations management in a workplace environment incorporating human resources into an automated environment, the computer program product comprising a computer readable storage medium having program instructions embodied therewith, the program instructions executable by a processor to cause the processor to: provide a network of a plurality of modular shell components, wherein each shell component is configured to include data stores and to interface with plugin software components to autonomously manage data and decisions related to the operations of a resource or an activity in an automated environment, and wherein each shell component communicates with one or more other shell components to provide a scalable architecture, including: configure at least one of the shell components for a human resource and the human-resource shell component provides activity scheduling and data management for a role of the human resource; configure at least one of the shell components is configured for a non-human resource for activity scheduling and data management of the non-human resource; and configure at least one of the shell components is configured for an activity to be carried out by a human resource or a non-human resource.

According to a further aspect of the present invention there is provided a computer program product for customising a shell component for operations management in a workplace environment incorporating human resources into an automated environment, the computer program product comprising a computer readable storage medium having program instructions embodied therewith, the program instructions executable by a processor to cause the processor to: provide the shell component with a generalised set of core components configured to include data stores; apply interfacing plugin software components customisable to a specific application by configuring interfacing behaviour between the core components; and provide a communications component for providing communication to external systems and other shell components, and internal communications between the core components of the shell component; wherein the shell component is configured to be one of: a resource shell component for human resources providing activity scheduling and data management of a role of the human resource; a resource shell component for non-human system resources for activity scheduling and management of the resource; or an activity shell component for activities to be carried out by a human resource or a non-human resource.

Further features provide for the computer-readable medium to be a non-transitory computer-readable medium and for the computer-readable program code to be executable by a processing circuit.

Embodiments of the invention will now be described, by way of example only, with reference to the accompanying drawings.

### BRIEF DESCRIPTION OF THE DRAWINGS

In the drawings:
- Figure 1: is a block diagram illustrating an example embodiment of the described system;
- Figure 2A: is a schematic diagram illustrating the concept of a holarchy as applied to the described network of shell components;
- Figure 2B: is a schematic diagram of an example embodiment of the described shell component;
- Figure 3A: is a flow diagram of an example embodiment of an aspect of the described method of providing a generalised shell component;
- Figure 3B: is a flow diagram of an example embodiment of another aspect of the described method of providing a network of shell components;
- Figure 4: is a schematic diagram of an example embodiment of a network of shell components for a workplace environment;
- Figure 5: is a schematic diagram illustrating an example embodiment of a large network of shell components;
- Figure 6: is a schematic diagram of an example embodiment of a shell component showing a self-improvement loop;
- Figure 7: is a schematic diagram of an example embodiment of a shell component illustrating conversations between the components of a shell component;
- Figure 8A: is a flow diagram of an example conversation between shell components;
- Figure 8B: is a flow diagram of another example conversation between shell components;
- Figure 9: is a schematic diagram of an example workplace holarchy of shell components;
- Figure 10A: is a schematic diagram of another example workplace holarchy of shell components;
- Figure 10B: is a schematic diagram of the example workplace holarchy of Figure 10A with chosen resources;
- Figure 11A: is a schematic diagram of an example shell component showing a service instance life-cycle;
- Figure 11B: is a schematic diagram of an example workplace holarchy of shell components corresponding to the example of Figure 11A;
- Figure 12: is a schematic diagram of an example of data captured by a shell component;
- Figures 13A to 13D: are schematic diagrams of example holarchies of shell components in a mining environment;
- Figure 14: is a schematic diagram of an example holarchy of shell components in a healthcare environment;
- Figure 15A: is a schematic illustrating an example of a human interfacing with a shell component;
- Figure 15B: is a schematic diagram of illustrating an example communication between shell components; and
- Figure 16: illustrates an example of a computing device in which various aspects of the disclosure may be implemented.

### DETAILED DESCRIPTION WITH REFERENCE TO THE DRAWINGS

A computer-implemented system is described for operations management in a workplace environment incorporating human resources in an automated environment. The operations management may entail the coordination of operational activities and the management of the associated information including data and resource management. The system provides a network of a plurality of modular shell components with each shell component including data stores and to interface with plugin software components to autonomously manage data and scheduled activities of a resource or an activity in a workplace environment. The data stores of the modular shell components are configured to stable data, volatile data, past data, and future data.

The modular shell components provide software entities that represents a physical resource or activity in a digital space with interaction with other software entities. The shell components provide a single accessible point of communication and collaboration for the resource or activity the shell represents. The physical resource may be a human resource or a non-human resource providing a network to integrate human and non-human resources carrying out activities. The software entities are referred to as holons as they are autonomous and cooperative system elements. The modular shell components are configured to be customised to provide the software entities for the physical entities or activities that they represent by including customised data stores and plugin software components.

The network of software entities may be an agent-based or an actor-based architecture. An agent-based computational model simulates the actions and interactions of autonomous agents (both individual or collective entities) in order to understand the behaviour of a system and what governs its outcomes. The agents are independent except through interaction protocols between agents. An actor-based architecture is a mathematical model of concurrent computation that treats actors as the universal primitive of concurrent computation. In response to a message an actor receives, the actor can: make local decisions, create more actors, send more messages, and determine how to respond to the next message received. Actors may modify their own private state, but can only affect each other indirectly through messaging.

To provide a system of the networked software entities, the modular shell components are self-organising and interact with one-another, yet manage and control their own data that represents them individually. Each shell component may have custom decision-making plugins to individualise their behaviour to provide a software entity.

Each software entity reads state data of the physical resource or activity it represents and manages and controls its own data (for example, what it is, its roles, its schedule, etc.). Each software entity is autonomous in its decision making on its own data (for example, how it plans, how it acts out plans, what it has done, or changing data that represents what role it plays in the organisation). The software entities can collaborate and interact with other software entities to accomplish larger organisational goals.

Each modular shell component is realized as an individual software process that runs in parallel with other shell processes. Since an organization often has thousands of resources and activities, this requires a hardware and software platform combination that allows for massively concurrent processes where the memory of each component is managed only by that process, and these processes interact through messages. In one embodiment, the concurrent, functional programming language Erlang^{™} is chosen for the implementation of the shell components since it allows millions of lightweight concurrent and isolated processes to run while communicating through messages. However, other concurrent, functional programming languages may be used.

The workplace environment may be any environment in which one or more human recourses carry out activities and interact with non-human resources such as automated processes and/or equipment. The human resource activities may be paid work, voluntary, educational, or other forms of activity. Non-limiting examples of such workplace environments include: manufacturing environments, servicing environments, industry environments, agricultural environments, maritime environments, transport environments, mining environments, healthcare environments, education environments, etc. An environment may be at a single location or may be spread across a plurality of locations. An environment may be at a fixed location or may be moveable in the case of maritime or transport environments.

A generalised shell component is provided as a template shell component with a generalised set of core components. The core components are configured to be data stores with data including temporal data, such as past, current, and future data and state data including stable and volatile data. The core components may provide data stores for attribute data, scheduled data, present executing data, and past data. The generalised shell component includes interfacing plugin components customisable to a specific application and configurable to customise interfaces between the core components. The generalised shell component also includes a communications component for providing external communication to external systems and other shell components, and internal communications between the components of the shell component.

The generalised shell component is customisable in a workplace environment to be one of: a resource shell component for human resources or non-human resources or an activity shell component for activities to be carried out by the resources. A human resource shell component provides activity scheduling and data management for a role and activities of the human resource. A resource shell component for non-human system resources may include an automated interface for activity scheduling and management of the non-human resource.

In a network of shell components in a workplace environment: at least one of the resource shell components is configured for a human resource and the human-resource shell component for scheduling and management of human activities; at least one of the resource shell components is configured for a non-human system resource with automated interfaces for activity scheduling and management; and at least one of the shell components is configured for an activity to be carried out by resource shell components. The network may incorporate any number of shell components providing user interfaces to integrate one or more human resources with one or more non-human system resources.

A communication server may be provided at which a plurality of customised shell components is configured for a workplace environment with communication between each customised shell component and a dedicated workplace environment device or user interface. The workplace environment device or user interface may include downloaded interfaces for interaction with a shell component at the server. The distributed, self-similar, and self-organising nature of the shell network provides a modular expandable and adaptable network in a work environment.

The system provides an affordable and flexible way of digitising low-level operations, while encouraging the use of human labour by integrating human workers into automated workplace environments. Using human resource shell components, human interfaces for workers are integrated into a network of non-human resources and scheduled activities. The network is scalable from one or a few workers and non-human resources within an environment to hundreds of workers and resources or more.

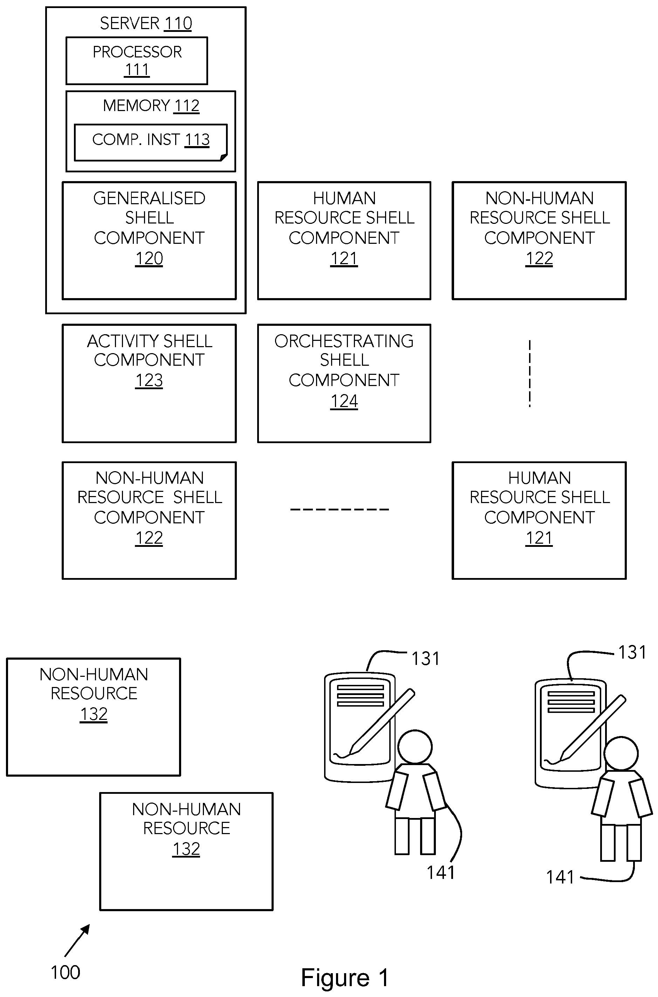

Referring to Figure 1, a block diagram illustrates the described system 100 in a workplace environment. A server 110 is shown that provides a generalised shell component 120.

The server 110 may include a processor 111 for executing the functions of components described below, which may be provided by hardware or by software units executing on the server 110. The software units may be stored in a memory component 112 and instructions may be provided to the processor 111 to carry out the functionality of the described components. In some cases, for example in a cloud computing implementation, software units arranged to manage and/or process data on behalf of the server 110 may be provided remotely. Some of the components may be provided by software applications downloadable onto and executable on the non-human resources 132 and the mobile communication devices 131.

The generalised shell component 120 can be customised to a human resource shell component 121, a non-human resource shell component 122, or an activity shell component 123. The customised shell components 121-123 may be provided on various systems in the workplace environment. Each shell component 121-123 is realized as an individual software process that runs in parallel with other shell processes. Since an organization often has thousands of resources and activities, this requires a hardware and software platform combination that allows for massively concurrent processes where the memory of each component is managed only by that process, and these processes interact through messages.

An activity shell component 123 or a resource shell component 121, 122 may be further configured as an orchestrating shell component 124. The configured shell components 121, 122, 123, 124 form a network providing an automated workplace environment. The human resource shell components 121 may interface with mobile communication devices 131 and other technical devices, such as projectors, audio devices, etc., used by human workers 141 in the workplace and these communication devices 131 may themselves be a non-human resource for which a shell component is configured. The non-human resource shell components 122 may interface with non-human resources 132 such as machine system interfaces, robotic components, tooling interfaces, computer devices for running processes, etc.

A customised human resource shell component 121 may include one or more of: delegation plugin components for communication and routine decision making on behalf of the human; interfacing plugin components for interfacing between the digital and physical worlds to facilitate bidirectional communication; and data processing and management plugin components for performing calculations and analysis on data obtained from the human and their surrounding environment.

A customised activity shell component 124 or a non-human resource shell component 122 may include one or more of: scheduling plugin components that manage the activity or resource component's schedule; communication plugin components to communicate and manage activities and actions; collaboration plugin components to collaborate and interact with human resources through their shells as well as other activity or non-human shell components; and data processing and management plugin components to process data related to activities and roles of the resource the shell represents.

In one embodiment, the shell component on which the described system is based uses a Biography-Attributes-Schedule-Execution (BASE) architecture. This architecture provides the core components of an administrative and data logistics automation layer for workplace resources, assets, and activities. The shell components serve to bring intelligence to previously "dumb" assets or bring a new level of connectivity and decision making to existing assets.

The shell components provide an intelligence layer to any resources, or the activities they are involved with, in an organisation in the form of an administration shell. An instance of the administration shell encapsulates the administrative aspects of resource and activity management from planning, though execution, and to post execution, allowing the resource to act autonomously when the administration shell is configured with the correct business logic.

A network of the shell components that each represent an activity or a resource in an organisation allows these resources and activities to self-organise and structure the data flow between their shell components to complete some goal of the organisation they belong to.

A workplace environment may take many forms and sizes. As an example, a factory workspace may include host servers as a central management system with system devices positioned around the workspace or as mobile devices. The system devices may include factory equipment, operating computers, cameras, lighting systems, speakers or projectors for issuing instructions at a workstation, and workers' and management's mobile tablets or other mobile devices such as smart wearable devices.

The internal components of the architecture, their specialisation, and the rules that govern the data flow between them results in the emergence of the following properties:
- Self-improving behaviour of the shell component, and the management of the resource it represents.
- Traceability and management of activities and the resources involved due to the universally applicable data storage and flow rules.
- Clear separation and management of business decisions and the data involved in the stages of scheduling, execution, post execution, and analysis.
- Enables the resource or activity it is applied to, to act autonomously since the required data for execution is encapsulated by the administration shell enabled resource or activity.
- The shell components can be connected dynamically to each other through another shell component which then represents the collection of connected shell components (and therefore the resources they manage) as a single resource. This enables resources enabled with this shell component to cooperatively act towards a shared goal.
- The pattern of cooperative connection can be continued indefinitely, forming a self-similar and repeatable structure, reflecting the resources, structure and processes of the organisation.
- The intelligence layer is highly scalable, modular, and modifiable to match the specific needs of a business.
- The intelligence layer enables the construction of a resource management system that allows for a dynamic change between distributed, and centralised control.

The described system uses the concept of a holarchy. A collection of holons (autonomous and cooperative system elements) that are arranged (either manually or automatically) to deliver a particular service is known as a holarchy. Holarchies are *fractal* or *recursive* in nature, i.e., the individual holons that comprise a holarchy may contain holarchies themselves. In the described network, a central orchestrating shell component 124 may act as an orchestrating holon and may form service delivery contracts with subordinate resource shell components representing holons to deliver services it needs to complete its own responsibilities. The term orchestrating shell component 124 refers to any shell component that forms the central node between other shell components it contracts. An orchestrating shell component 124 can, from a higher-level view, be seen as a service providing shell component to a more senior orchestrating shell component. An orchestrating shell component 124 can be a resource shell component, like a worker needing the services of a tool, or an activity shell component that brings together resources to fulfil a task.

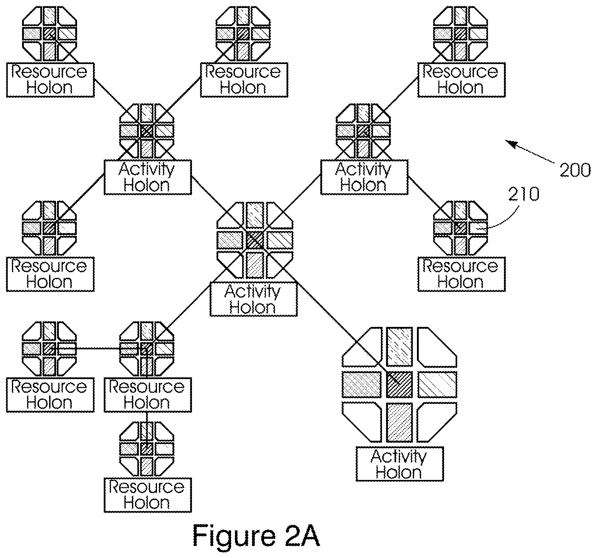

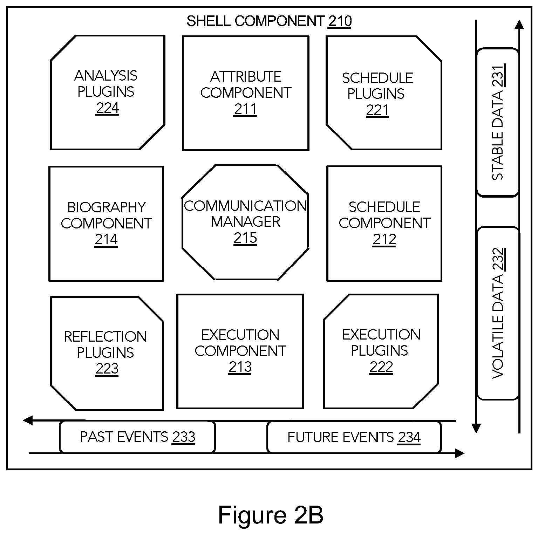

Figure 2A illustrates part of a holarchy 200 as it may appear in a manufacturing environment and offers a visualisation of the fractal nature of holarchies. The holons in the holarchy 200 are each provided by a shell component 210 as described further below with respect to Figure 2B. The shell components 210 may be one of a human resource shell component 121, a non-human resource shell component 122, or an activity shell component 123.

Figure 2B shows a schematic illustration of an example embodiment of the described shell component 210. The shell component includes core components each of which are data stores for storing categories of the data required during operation of the shell component. The core components include: an attribute component 211 for storing attribute data relating to the resource or activity; a schedule component 212 for storing scheduling data relating to the future activities of the resource or activity; an execution component 213 for storing volatile data relating to a current state of the resource or activity; and a biography component 214 for storing data relating to past events of the resource or activity. The shell component 210 also includes a communications manager 215.

The architecture specifies the use of generalised core components 211-214 by customising to the specific business needs of the shell component instance by the use of plugin components 221-224. The data flows between the core components 211-214 and plugin components 221-224 are key to the capabilities of the architecture. All decisions relating to the resource or activity the network of shell components represents can be placed into one of the four plugin components. The plugin components 221-224 may be represented as corners in the shell component 210. All administrative aspects around these customised plugins may be generalised and moved to the core components 211-214, standardising communication and collaboration between resources and activities. The plugin components 221-224 may be sets of instructions for interaction between the core components where the set of instructions can be adapted within parameters to a given context or application.

The architecture consists of the core components, the plugin components, and a communication manager component 215. The core components will be discussed first, followed by the plugin components. Figure 2B illustrates the architecture and the relationships components have to each other. A correctly implemented network of shell components 210 that each represent an activity or a resource in an organisation will allow these resources and activities to self-organise and structure the data flow between their shell components 210 to complete some goal of the organisation they belong to.

The biography component 214 is a data store configured to contain logs, information, and other data related to events in the activity or resource's past. A resource's completed activities, or an activity type's completed instances along with production data logs, reviews, or quality checks are examples.

The attribute component 211 is a data store configured to hold the properties, capabilities, permissions, and any other data or information about the resource or activity pertaining to the role it plays and a description of it physical form, if it has one. Examples are an ID number, or age for humans, or model number and location for machines. The attribute component 211 data store holds persistent data on the resource or activity type.

The schedule component 212 is a data store configured to contain information and data about activities a resource will be involved with in the future. It serves the same purpose as the biography component 214 but for the future instead of the past.

The execution component 213 is a data store configured to hold volatile data dealing with the current state of the resource or activity. Circumstantial data such as position, velocity, heartrate, power consumption are examples of data handled by the execution component 213.

The communications manager component 215 is responsible for connectivity to external digital systems or other shell components 210, as well as the communication between internal components of the shell component 210. It is responsible for moving data from component to component, or from shell component to shell component.

In the case of a shell component 210 that is customised to be a human resource shell component 121, the core components may carry out the following functions. The attribute component 211 may store attribute information of the individual human worker, constructing a form of digital model. The schedule component 212 may store and manage information relating to all planned activities to be performed by the human worker. The execution component 213 may manage the information generated by the execution of activities. The biography component 214 may store the information of all activities that have been completed by the human worker.

The core components 211-214 of the shell component 210 are common to any application and as such, the implementation of only the core components in a specific context will probably not add significant value to stakeholders. For a specific context or application, the shell component must be extended, customised, and integrated with regards to the following functions:
the scheduling and management of activities in the schedule component 212;
the management of activity data and execution in the execution component 213;
the collection and management of post-execution data in the biography component 214; and
the analysis of biographic information to adjust attributes in the attribute component 211, provide insight to stakeholders, and support future decision-making.

This extension and customisation of the architecture is facilitated through plugin software components to the shell component's 210 corner components as is depicted in Figure 2B. The following sections introduce the four general groups of architecture plugins, namely: scheduling plugins 221; execution plugins 222; reflection plugins 223; and analysis plugins 224.

The generalised shell component 120 makes provision for, and supports, the integration of the application-specific plugin components 221-224. The software provides generic interfaces which allow for the integration of custom software plugins developed in any programming language. Furthermore, the core components 211-214 provide the plugins 221-224 with access to information and mechanisms to enable their functionality.

The scheduling plugins 221 (SPs) represent a set of tools, algorithms, software systems and decision-maker interfaces, which create, manage, and optimise the scheduled activities of the resource or activity. As shown by the geometry of Figure 2B, the scheduling plugins 221 interface with the communications manager 215, the attribute component 211 and the schedule component 212 of the shell component 210. Through the interface with the communications manager components 215, the scheduling plugins 221 can receive external or internal requests and notifications that relate to the scheduling of activities. Business logic can then be applied by the scheduling plugins 221 to make use of the data in the attribute component 211 and the requests received on how to schedule new activities as well as optimise the existing schedule.

The execution plugins (EPs) 222 are responsible for starting and managing the execution of scheduled activities. Execution plugins 222 have access to the state variables in the execution component 213, as well as the attribute component 211 and the communications manager 215. Execution plugins 222 can make intelligent decisions based on this data on how to manage the execution of activities the resource is involved with. Execution plugins 222 can report activity progress and information back to the entity that requested it through the communication manager 215.

The reflection plugins (RPs) 223 create and maintain biographic entries of completed activities or events. When an activity has been completed, it is entered into the biography component 214. Data about the events of an activity can still be gathered post execution such as reviews, quality checks, and customer feedback. The reflection plugins 223 therefore enable quality feedback, traceability and data gathering on the results of activities indefinitely.

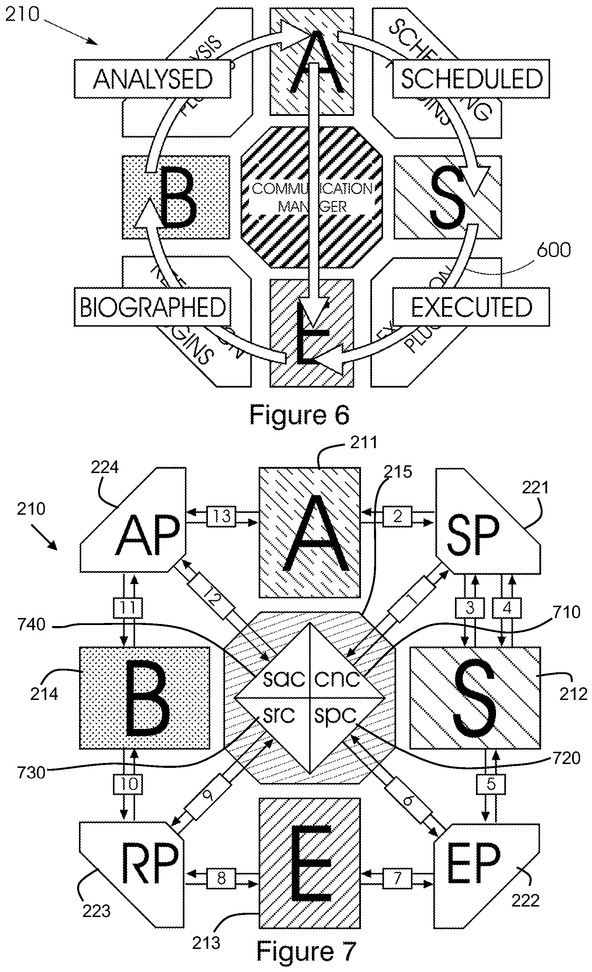

The analysis plugins (APs) 224 generate value from the data recorded in the biography component 214 with the aim of updating the attribute component 211 and providing information to stakeholders. The analysis plugins 224 close the information flow loop of the shell component 210 by updating attribute component 211 from biography component 214, which enables the self-improving, self-analysis and self-optimisation of the enabled asset or activity. The cycle repeats with the schedule plugins 212 utilising the updated attributes to make better scheduling decisions and the execution plugins 222 better execution decisions. This flow loop is shown in Figure 6.

The attribute component 211 contains static information about the resource that may be critical to execution decisions, so it is accessible to any of the plugins 221-224 that need to draw from it. This allows the same plugins installed on different resources to make individualised decisions.

The design of the shell components 220 provides information flow through its components and that dictates how it behaves through different contexts. The architecture separates data involved in the management and administration of resources and activities by the universal principle of time flow and time rate as illustrated in Figure 2B. This separation reveals the four universally applicable categories of business decisions shown in Figure 2B as the corner components. The separation of decision-making components from shared data allows for these active and value-adding components to remain modular, while ensuring the integrity of the data they need to access.

Figure 2B illustrates the flow between volatile data 231 and stable data 232 between the execution component 213 and the attribute component 211 and the flow of temporal data between past events 233 of the biographic component 214 and future events 234 of the schedule component 212.

In the case of a human resource shell component 121, the plugin components 221-224 provide the following functionality. The scheduling plugins 221 use the data of the individual worker, stored in the attribute component 211, to make decisions regarding the execution of future activities, which it adds to the schedule component 212. The execution plugins 222 initiate and manage the execution of scheduled activities by sending information to the worker, and monitoring the worker's state, via the execution component 213. The reflection plugins 223 convert and translate the data acquired during the execution of an activity, and writes the information to the biography component 214. The analysis plugins 224 perform analysis on the information stored in the biography component 214 in order to update the digital model of the worker maintained within the attribute component 211. A human resource shell component 121 may interface with a human in various ways. The interfaces themselves may include non-human resource shell components 122. Interfaces may include one or more of: a graphical user interface provided on computing device, motion tracking cameras; overhead projectors, etc. The interfacing technologies are not limited and can be dynamically changed in a workplace environment.

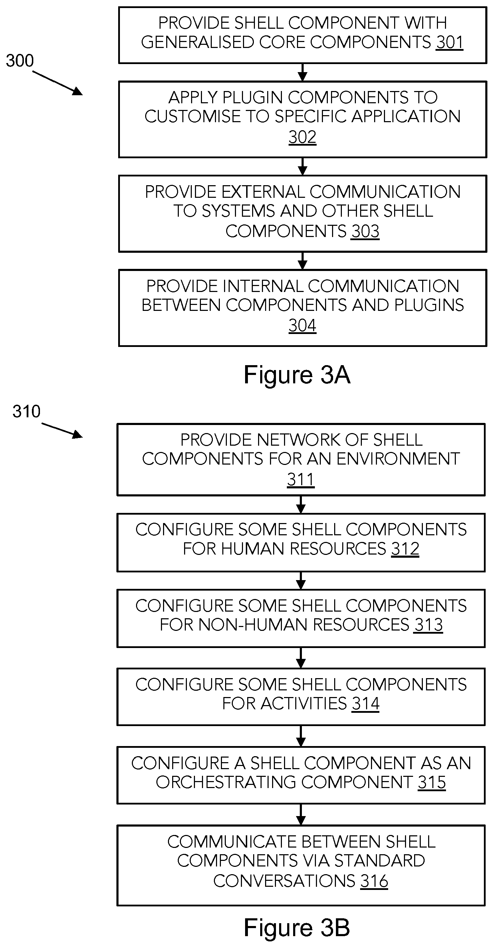

Figures 3A and 3B show flow diagrams 300, 310 of example flows of methods provided by the described architecture.

Referring to Figure 3A, the flow diagram 300 shows a computer-implemented method for customising a shell component for operations management. The method provides 301 a generalised shell component with a generalised set of core components configured to be data stores for attribute data, scheduled data, present executing data, and past data. Interfacing plugin components are applied 302 between the core components to customise to a specific application and are configurable to customise interfaces between the core components. External communication is provided 303 to external systems and other shell components, and internal communication is provided 304 between the components of the shell component;

Referring to Figure 3B, the flow diagram 310 shows a computer-implemented method for operations management in a workplace environment. The method includes providing 311 a network of a plurality of modular shell components. Each shell component includes data stores and plugin instructions to autonomously manage data and scheduled activities of a resource or an activity in an automated environment. The method may configure 312 at least some of the resource shell components for human resources for scheduling and management of human activities. The method may configure 313 at least some of the resource shell components for non-human system resources for activity scheduling and management. The method may configure 314 at least some of the shell components for activities to be carried out by resource shell components. The method may configure 315 a shell component as an orchestrating shell component. The method may provide communication 316 between the shell components to provide a scalable architecture in the workplace.

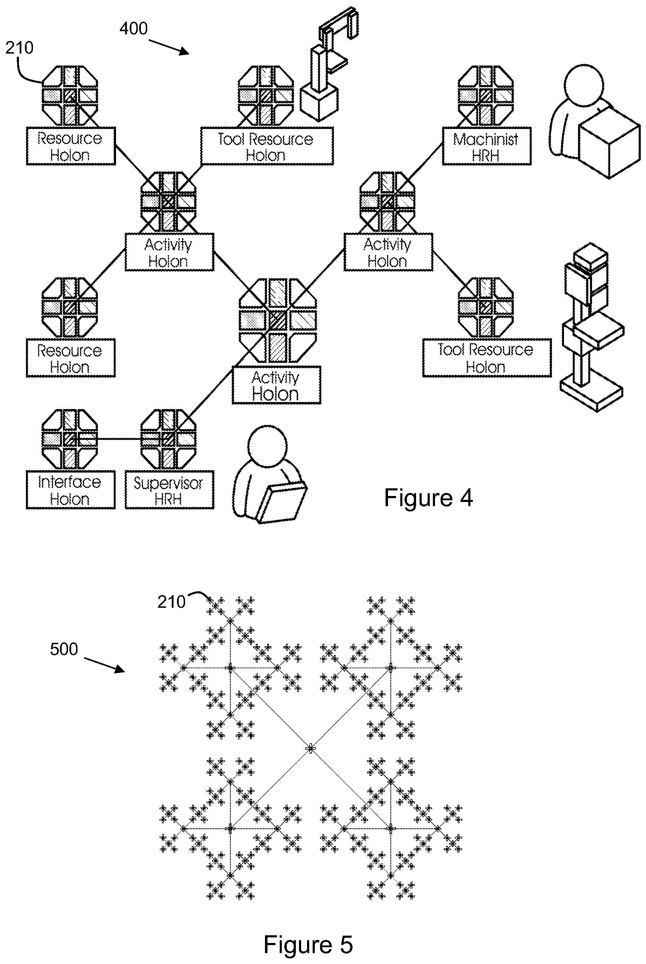

Referring to Figure 4, a network 400 is shown formed from the need to complete a specific activity. The shell component architecture is built from the ARTI (Activity or Resource Type or Instance) holonic design principles that recognise two classes of entities in an organisation: The activity and the resource. Figure 4 shows a hypothetical network of shell components 210 connected in a way that brings resources together for completing activities. The fractal nature of a network can be seen where subcontracts are formed by a central, orchestrating activity that requires sub-activities and resources to be completed.

Referring to Figure 5, a large network 500 of shell components 210 is shown. Figure 5 shows the network 400 of Figure 4 expanded to a larger part of the organisation. Since resources and activities are dynamically linked by contract net protocols, this fractal structure can change through time to best suit the current environmental and organisational needs. Due to the distributed control where each shell component contains the required intelligence and data for its subcomponents to perform their activities, the network is robust and will perform very well against disturbances.

Referring to Figure 6, a shell component 210 is shown with a self-improvement data flow loop 600. The shell component architecture sees the emergence of a self-improvement loop due to the clockwise flow of data through the architecture.

A shell component 210 on its own provides means for a resource or activity to autonomously manage its data and schedule; however, a network of shell components 210 can work together for emergent behaviour and self-organisation. For this collaboration between shell components 210, a standard set of interfacing protocols is provided to take place between shell components 210 in a network. These are referred to as conversations. Four conversations potentially take place through the lifecycle of a service delivered by one shell component 210 to another. The conversations may occur concurrently as a shell component may be part of multiple activity fulfilments at the same time.

Figure 7 illustrates a shell component 210 with the full cycles of conversations taking place. It may be noted how the conversations take place through the plugins with results written to the core components. This aids in separating and specialising business decisions while generalising the administrative aspects of this collaborative exercise.

The first conversation 710 is the Contract Negotiation Conversation (CNC). It is initiated by an orchestrating shell component sending a "Request For Proposal" to a shell component for a resource or activity represented as a holon that could potentially provide it a service it requires. This conversation ends either with the contract being accepted by both shell components, or refused. Proposals sent by competing resources are handled by the scheduling plugins of the shell components of these resources. The scheduling plugins make use of the schedule component and attribute component to form this proposal (available time, qualifications, capabilities etc. may form part of the proposal).

The second conversation 720 is the Service Provision Conversation (SPC). When the service that was agreed upon is due, this conversation allows the orchestrating shell component and the Service providing shell component to exchange data on the execution of the service. This conversation ends by the contract being fulfilled, or by some stop condition terminating the service by either shell component.

The third conversation 730 is between a shell component and any other shell component that helps it reflect on the activity it completed. This could be gathering data, inspections etc.

The fourth conversation 740 is between a shell component and any other shell component that aids in analysis or requires analysis based on the data in the biography component.

The steps represented in Figure 7 may be divided into four contract stages as follows. A contract is a data structure containing details of a service that is being delivered by one shell component to another shell component. A contract holds the resulting decision and information for each of the states of a service's life. Conversations are the communication that influences changes in these contract data structures. Conversations are a way for two shell components to collaborate and communicate on the decisions and information that the contract is built from.

### Stage 1 Scheduling - A contract is created and edited by a scheduling plugin conversation between two shell components.

| | |
|---|---|
| Step 1 | The orchestrating shell component communicates through Contract Negotiation Conversation (CNC) process with the scheduling plugin (SP). The SP gives a proposal through the CNC. |
| Step 2 | The SP requests attributes to form the proposal. The attributes component (A) gives the relevant attributes. |
| Step 3 | The SP requests a current schedule for proposal decisions. The scheduling component (S) gives the relevant schedule. |
| Step 4 | The SP may schedule activity on acceptance of a proposal. S creates a new activity. |

### Stage 2 Execution - When a contract is executed, it is further edited through an execution conversation between two shell components.

| | |
|---|---|
| Step 5 | The execution plugin (EP) is notified of a due act and the EP acknowledges. |
| Step 6 | Service Provision Conversation (SPC) is started and the orchestrating shell component is connected. Orchestrating shell component acknowledges impending service delivery. Activity data is exchanged (monitoring, controlling, logging, assisting etc. between orchestrating shell component and contracted shell component. |
| Step 7 | EP uses state variable data from the execution component (E) to make execution decisions. E gives required state data. |

### Stage 3 Reflection - A completed contract is biographed and a reflection conversation between the two shell components adds post-execution information to the contract, for example, quality rates, how well it was fulfilled, etc.

| | |
|---|---|
| Step 8 | E notifies reflection plugin (RP) of completed act. RP acknowledges. |
| Step 9 | RP establishes required Service Reflection Conversations (SRC). Reflective data is exchanged (reviews, quality inspection, etc.). |
| Step 10 | RP maintains the entry of the activity in the biography component (B). B accepts the RP requests and data. |

### Stage 4 Analysis

| | |
|---|---|
| Step 11 | B notifies relevant analysis plugin (AP) of newly biographed activity. AP acknowledges and can draw data from B. |
| Step 12 | AP establishes required Analysis Conversations (SAC). Analytic data is exchanged. |
| Step 13 | APs can update attributes based on analysis. Attribute component (A) accepts AP requests and data. |

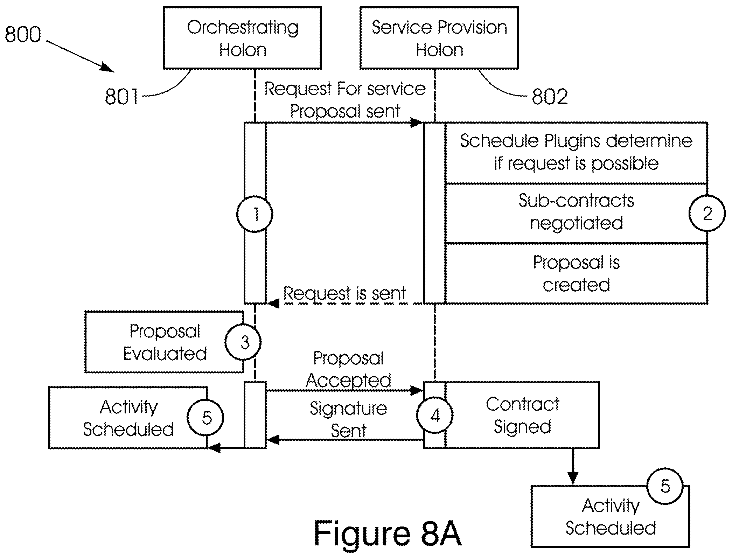

Figure 8A shows the Contract Negotiation Conversation 800 of Stage 1 between an orchestrating shell component 801 (referred to in the figure as an orchestrating holon) and a service providing shell component 802 (referred to as a service provision holon).

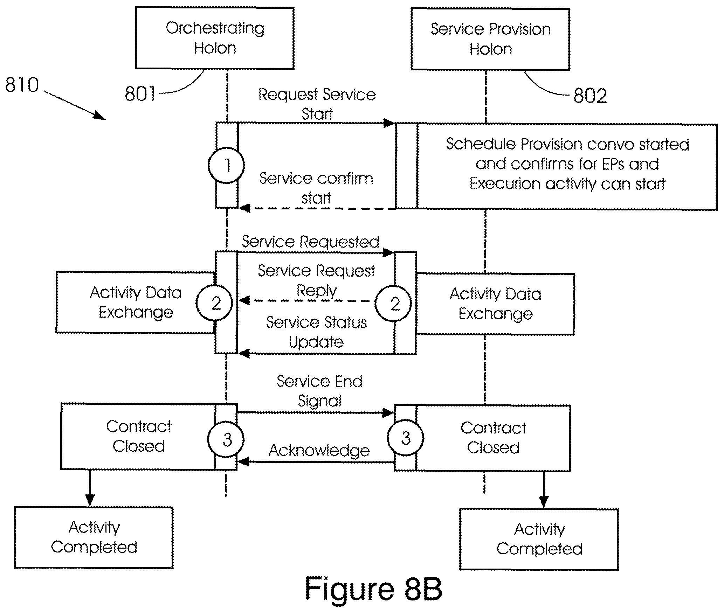

Figure 8B shows the Service Provision Conversation 810 of Stage 2 where a contract is fulfilled by the service providing shell component 802 to the orchestrating shell component 801.

In Figure 2A, each connection between two shell components represents an active Architecture Service Provision Conversation (SPC). The following section discusses how the SPC functions may be implemented.

All that is needed for an orchestrating shell component to begin the connection process to a service providing shell component is to know how to contact its communications manager. For this, a directory with a list of all available shell components and the services they provide can be consulted, or the contact information can be coded directly into a plugin of the shell component.

Some working examples of how workplace holarchies may form are provided. Holarchies can be coarse, where a single activity employs all resources, or broken down into more sub-activities for more modularity, distribution, or visibility. These examples are examples of activities and resources shell components may be created for.

### Factory Maintenance Holarchy Example

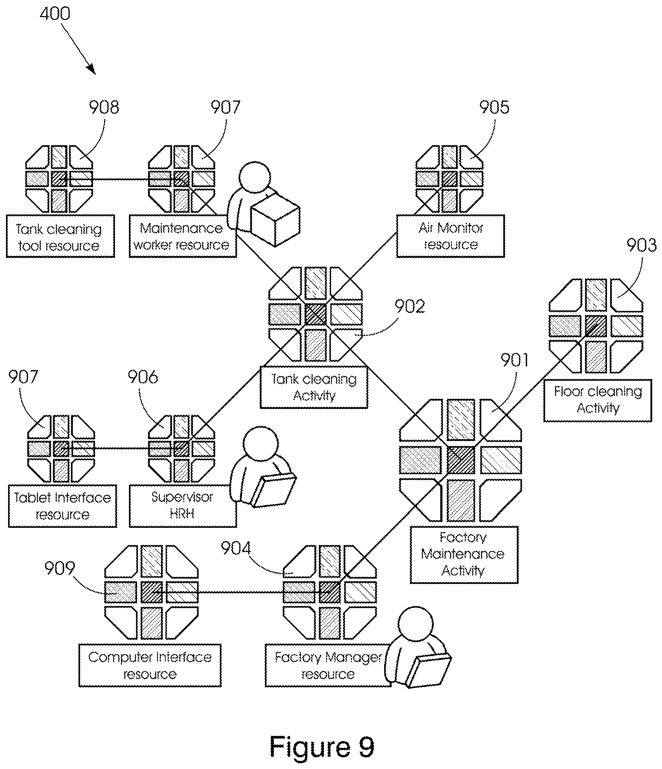

Figure 9 shows parts of a workspace holarchy 900 that may be formed by the initiation of a factory maintenance activity 901. This parent activity requires the completion of sub-activities such as a tank cleaning 902 and floor cleaning activity 903. The factory maintenance activity 901 also requires a factory manager 904 to provide expert advice or decisions with an interface resource 909.

The tank cleaning sub-activity 902 requires an air monitor resource 905, a supervisor 906, and a maintenance worker resource 907. The supervisor 906 requires an interface resource 907 and the worker 907, a tank cleaning tool resource 908. Each activity holon reports back to its parent activity while managing and communicating with the resources it employed.

### Bracket Making Activity Example

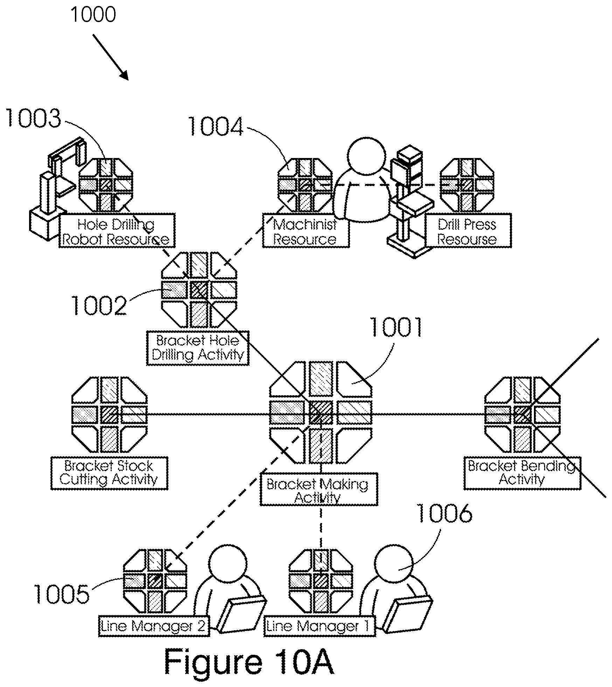

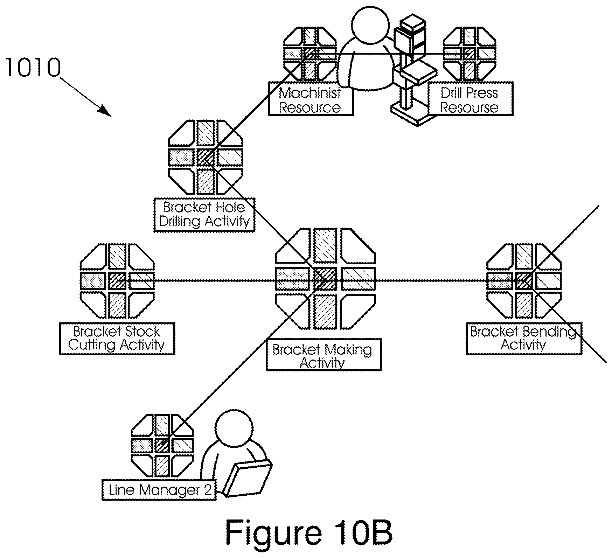

Figure 10A shows a workspace holarchy 1000 for a bracket making activity 1001 that is contracting the required resources and sub-activities. The bracket hole drilling activity 1002 will deliver the service of drilling the bracket holes, and it requires a robot resource 1003 that can drill holes for it. It has the choice between a hole drilling robot 1003 and a machinist worker 1004. The hole drilling activity shell component 1002 sends a Request For Proposal (RFP) to both the robot 1003 and the machinist's 1004 shell components and accepts the more favourable proposal. The bracket making activity 1001 also requires a line manager 1005, 1006 to report any problems or progress to. There are two line managers 1005, 1006 on duty and an RFP is sent to their shell components. Figure 10B shows the formed holarchy 1010 with the chosen resources.

### Composites Layup Example

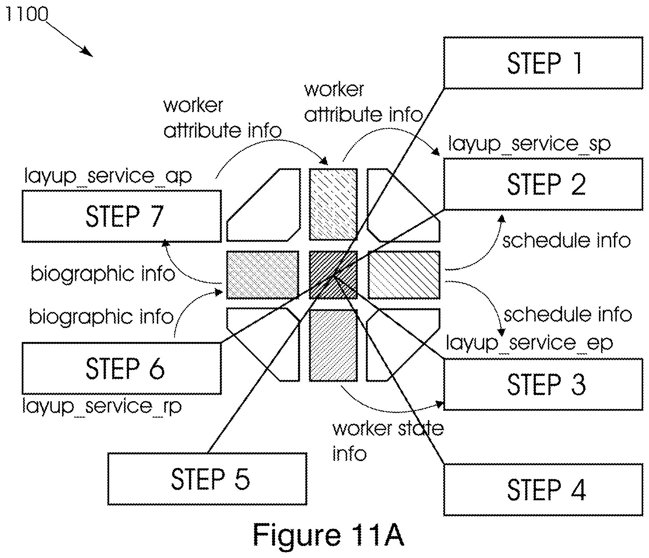

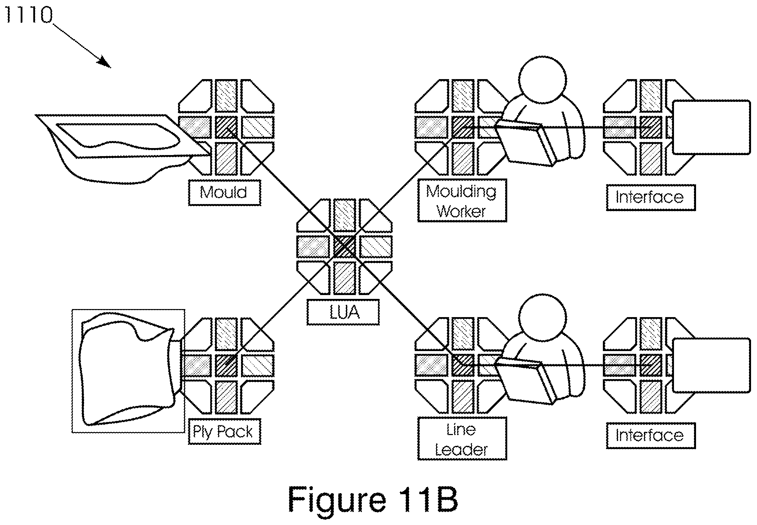

To fully visualise the emergent process that interacting internal components of the shell components create, Figure 11A shows a service instance life-cycle 1100 inside a shell component. This is illustrated in the context of a simplified overview of an example composites layup service performed by a moulder resource for a moulding activity holon 1110 shown in Figure 11B. Note that the service life-cycle starts with the Request For Proposal sent to the shell component by the parent moulding activity. Figure 11B shows how the moulding worker formed part of the moulding activity's holarchy along with the mould, ply-pack, and supervisor. In this image the moulding activity is called the LUA.

In Figure 11A, the following steps are shown.

| | |
|---|---|
| Step 1 | The layup service shell component receives a Request For Proposal from orchestrating activity shell for a layup service. |
| Step 2 | The layup service SP checks attributes for skill, checks schedule for time, forms a proposal and sends it. |
| Step 3 | The layup service EP starts due services, checks the execution component for correct worker state and gives instructions and records info. |
| Step 4 | Communication with the orchestrating moulding activity. |
| Step 5 | Feedback and reflection info. |
| Step 6 | The layup service RP subscribes to feedback information on the completed layup service, writes feedback info into the biography components with possible preprocessing and formatting. |
| Step 7 | The layup service AP uses data in the biography component to analyse activity duration and skill level, and update attributes with new average activity duration and skill level. |

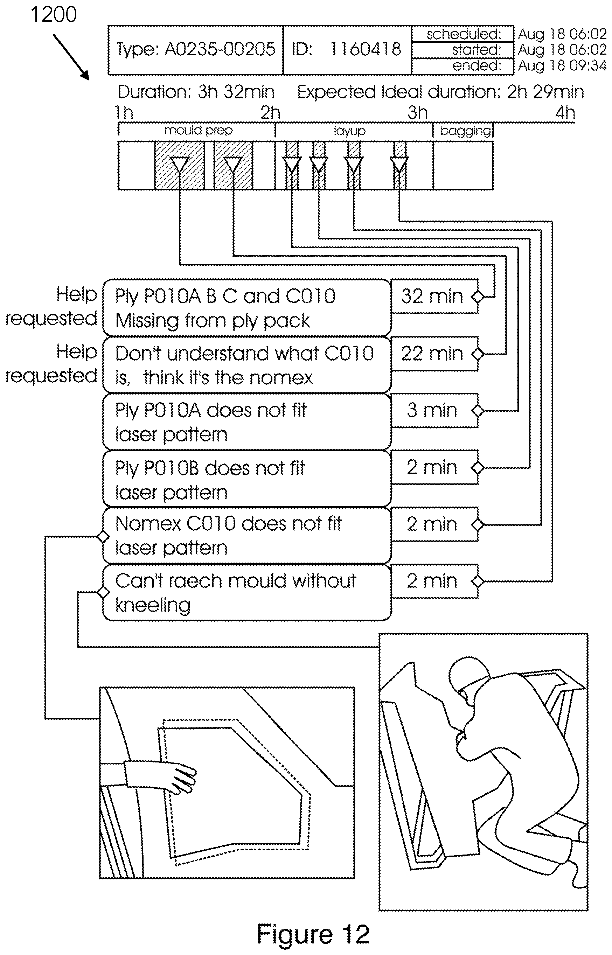

Figure 12 shows an example of the data captured by a worker's shell component during the layup activity.

### Mining Example

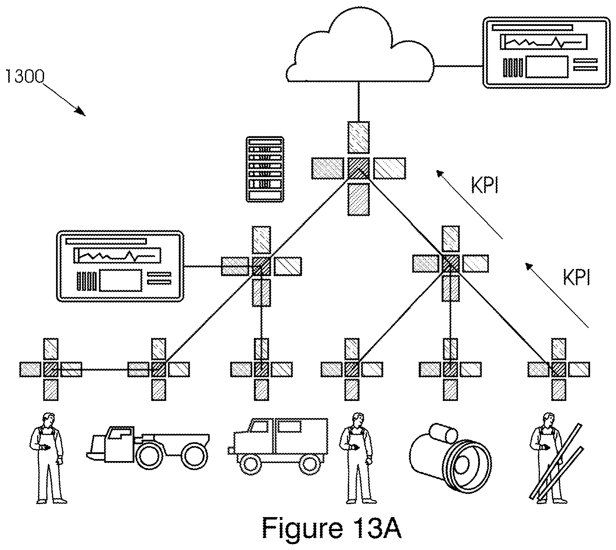

Figures 13A to 13D show examples in a mining environment. Figure 13A shows a holarchy 1300 as a hierarchy that includes resources and activities across the levels of an environment. Raw data at the lowest level is used by shell components at the lowest level. These shell components may process, refine, and send only the key performance indicators (KPI) and information to shell components at a higher level. This results in superior data pipeline bandwidth, response time, and efficiency.

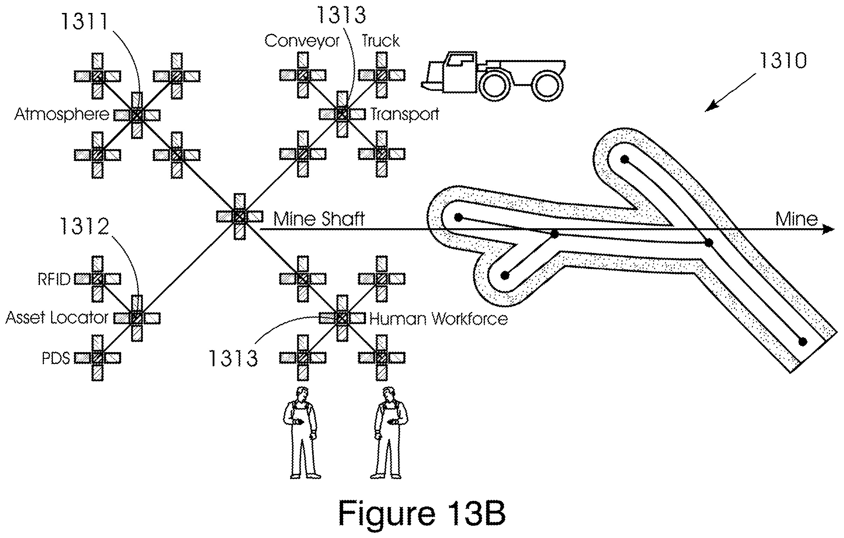

Figure 13B shows an example of a holarchy 1310 of a mine shaft. Shell components may in separated in parallel and start adding value by themselves. Shell components can later be connected together by a higher-level shell component that abstracts the group function. The higher-level shell component can make higher level decisions, analyses, and run intelligent algorithms.

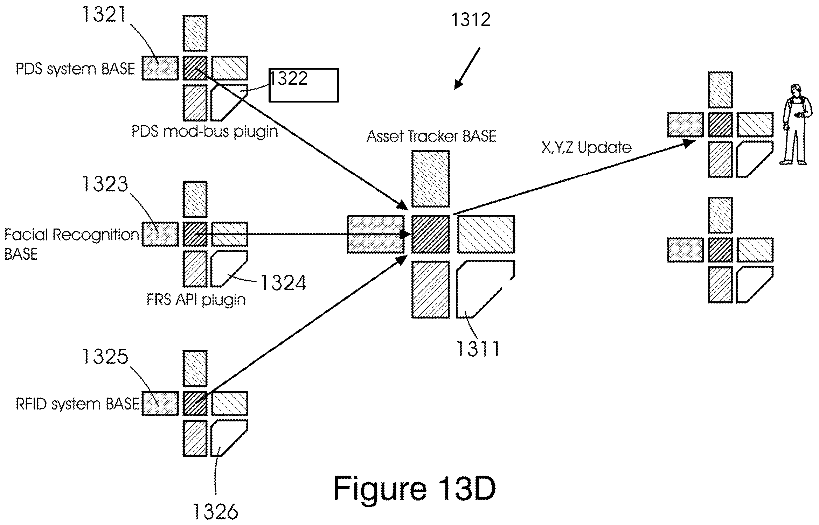

In Figure 13B, an atmosphere shell component 1311 may be central to a network of shell components for sensors monitoring the atmosphere. An asset locator shell component 1312 may be central to a network of tracking resource shell components as shown further in Figure 13D. A transport shell component 1313 may be central to a network of vehicle and other physical resources involved in transport. A human resources shell component 1314 may be central to a network of human resources. Any of the shell components can interact with other shell components to carry out activities using the interaction protocols.

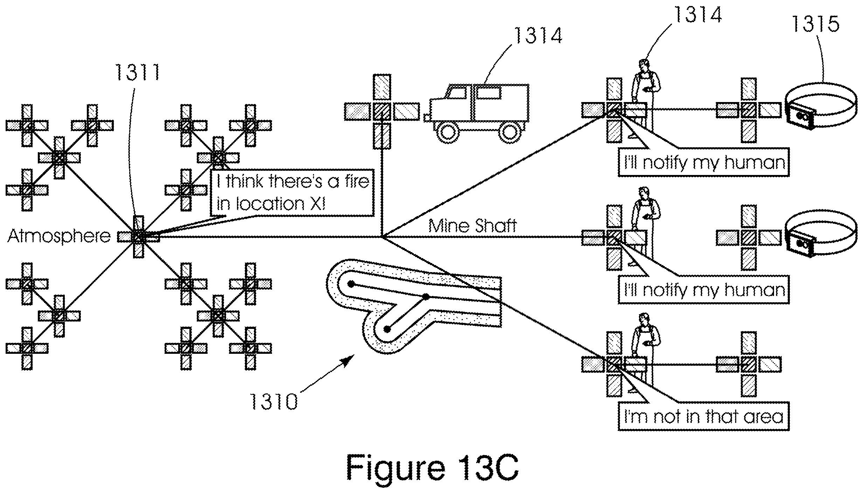

Figure 13C illustrates a safety application of the mine shaft holarchy 1310 in which an atmosphere shell component 1311 receives data from its sensor shell components that indicate a fire at a location in the mine shaft. The holarchy of the mine shaft communicates this to the relevant human resources via their shell components 1314 and interfacing notification devices 1315 as well as to non-human resource shell component 1316 of fire equipment resources.

Figure 13D illustrates the network of asset tracker shell component 1312 including a position detection system shell component 1321 having a data communication plugin 1322, a facial recognition shell component 1323 having a facial recognition system API plugin 1324, a radio frequency identification (RFID) system shell component 1325 having a RFID sensor connector plugin 1326. With the asset tracker shell component having position fusion, refinement or other algorithms.

### Healthcare Environment Example

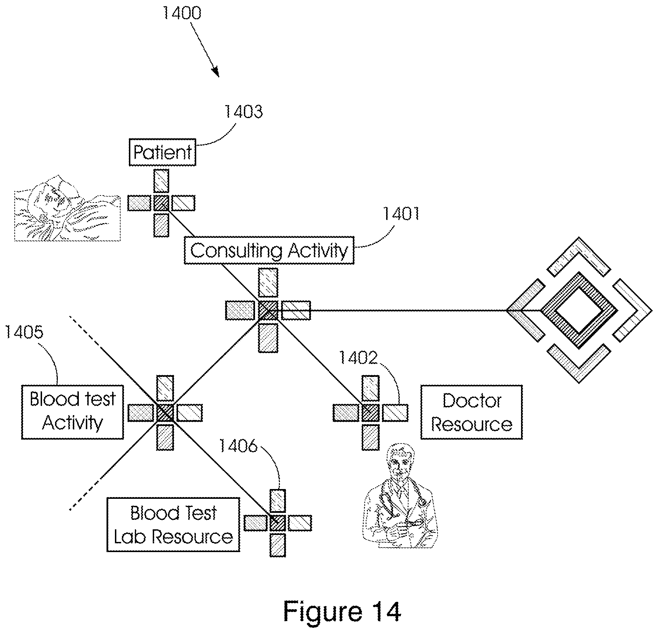

Figure 14 shows a holarchy 1400 for a healthcare environment. Resource shell components are configured for patients, doctors, and hospital resources. A patient will come in which triggers the creation of a "consultation" activity shell component 1401 which then finds the next available doctor for the patient. The doctor's shell component 1402 has a link to the new consultation activity and the patient's shell component 1403 is also linked to it.

Any tests the doctor orders will prompt the creation of a new "test" activity shell component 1405, in this example, a blood test activity shell component 1405). The test activity shell component 1405 is linked to a hospital resource shell component, in this example, a blood test laboratory resource shell component 1406. The test activity shell component 1405 is linked to the consultation activity shell component 1401 and by extension the patient shell component 1403 and the doctor shell component 1402.

The patient shell component 1403 can be informed by the consultation activity shell component 1401 where to go, what to prepare and will manage the administration involved.

The doctor's shell component 1402 will inform the doctor that he has a new patient and can start showing the doctor some information that the patient's shell component 1403 makes available from the patient history in their biography component. Any medication or procedure schedules the doctor prescribes will go onto the schedule component of the patient's shell component 1403 which can then trigger resources and activities in the hospital to fulfil that schedule.

### Human interaction

From a human user interaction perspective, a human user interacts via a mobile communication device, such as a tablet or smart phone, with a graphical user interface (GUI) providing information and interaction with the human resource shell component at a backend that controls the scheduling and execution details of an activity.
- The system contacts a human user to schedule an activity.
- The scheduling plugin of the user's shell component acts as the user's delegate and confirms the user is qualified and has the time.
- The scheduling component adds the proposal to the user's schedule.
- The execution plugin starts the proposed activity to ask the user when they can do the activity.
- The execution component decides to communicate this request through the user's tablet.
- The user interaction with the GUI at the tablet allows the user to schedule the request in a time slot. The proposed start time is communicated back to the scheduling plugin.
- The proposal is sent and the proposal is accepted and the scheduling plugin adds the activity to the schedule component.

When the user comes to start the activity, the following process occurs at the shell component:
- The execution plugin responsible for the activity takes over control.
- The user confirms via the tablet that they are ready.
- The execution plugin manages the execution of the activity and asks the execution component to communicate instruction to the user via the tablet or via other devices in the workplace, such as a projector projecting information at a workstation.
- The executing plugin ass the execution component to report on state variables and any errors are communicated.
- Every activity is unique and contributes to scheduling plugin and execution plugin decisions.
- Once the activity is finished, the activity is written to the biography component.
- The reflection plugin maintains and adds post execution data.
- The analysis plugin updates an activity model and the user's attributes.

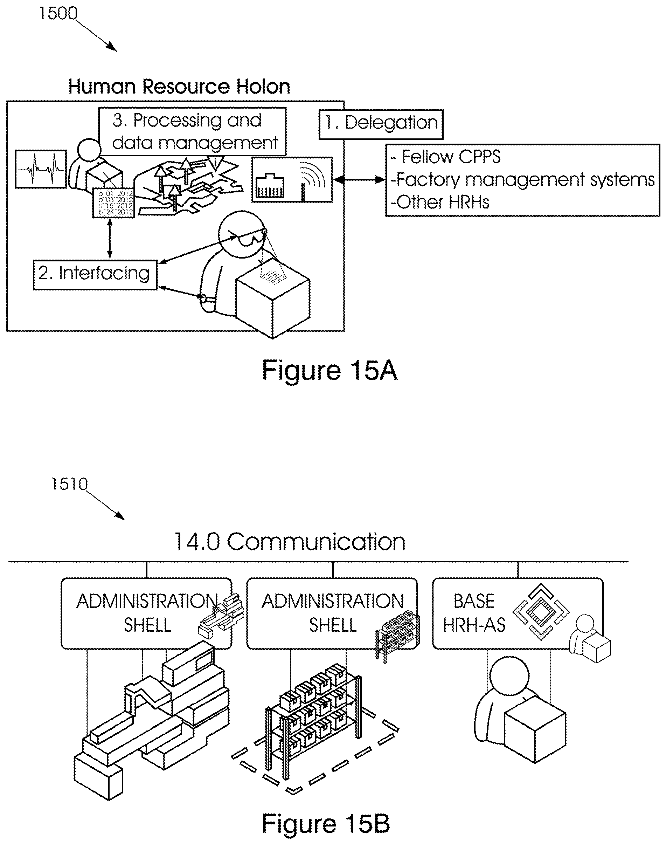

Figure 15A illustrates a human resource holon 1500 with integration into the system. The human resource may have interfacing devices for interfacing with a shell component. The interfacing devices may include, for example, smart glasses for reading Quick Response codes, smart watches.

Figure 15B illustrates communication 1510 provided by the system with shell components providing integration of a human worker into automated systems in Fourth Industrial Revolution (I4.0) manufacturing environments.

The described system is market and vendor agnostic with no prescription of solutions nor technologies, no ties to a specific manufacturer or developer, nor specific technology to function. Modularity enables incremental and concurrent development, as well as facilitating upgradability and interchangeability of components. Separation of concerns and capabilities promotes modularity by encapsulating sets of information with corresponding sets of functions, thereby minimising the dependencies from one concern to another. Interoperability and integrability support horizontal and vertical integration of different technologies in, or with, the shell components. Personalisation and customisation allow the unique idiosyncrasies of human operators, as well as the differences in environments and context, to aid in decision making and operations.

The system is a generic software application that is used as the backbone (serving as an operating system) for building robust application-specific solutions. The architecture core software may be provided in the Erlang programming language, and runs on all mainstream operating systems. Erlang is a highly concurrent and scalable programming language that was designed for robustness and extreme availability. The system may be supplied as the core software as a product and with companies enabled to develop plugins to the architecture to address their specific needs.

Digital messaging platforms, synchronised scheduling tools and data analysis tools can offer many benefits to enterprises, e.g., traceability and agility. The described system brings those benefits to the shop floor, connecting every worker with each other and the digital systems and environment around them. Furthermore, the described architecture supports an effective feedback-cycle for continuous improvement.

The system consists of small, self-containing functional units instead of one monolithic system. This means instead of taking weeks of planning and programming to change its functionality while risking bringing down the whole system, the described shell components are like building blocks that can be added and interchanged without breaking any other blocks. The shell components are intelligent and will automatically re-arrange themselves to fit the new requirements. The system can be scaled to work with one or two workers, or hundreds of workers, and the cost in hardware and software scales linearly - making it available to all SMEs.

The described system offers a solution to many shop floor control and monitoring requirements that can be scaled down to manufactures of only one or two people, with the ability of companies to develop their own plugins and addons to the system to fit their specific needs. The system also allows the advantages of digitisation to be applied to human labour, being a great benefit to developing countries such as India and South Africa.

This addresses a shortage of mechanisms to effectively integrate human workers with digital factory environments. This problem is multi-faceted and can be broken down into communication and information processing differences between humans and digital systems. The shell components for human resources act as middle-ware to help translate or interpret messages between humans and digital systems or machines.

The shell components for resources enable the traceability of a part throughout its life span, including the details of the activities performed on it, is organised and easily accessible for quality control and improvement.

Difficulties arise with synchronising activity planning and process management across all shop-floor entities. Changes in orders, improvements in processes, or management of unforeseen events on the shop floor introduces disorganised turbulence, until the necessary communication, re-training, and management can be performed. In these circumstances, the shop floor resources are required to be dynamic and agile to respond to changes in the daily/weekly schedule. The described system will support the communication and planning, both to the worker being assigned activities, and management that have to make decisions.

Due to the benefits of digitising and organising a worker's state, problems that they report on the shop floor are not hindered by vertical levels of organisation or the effort of finding the correct person to speak to. The shell components allow messages to reach the correct person without effort, giving the worker a greater sense of power over their work environment.

The described architecture provides a platform for data analysis, and mechanisms for effectively updating the maintained digital model(s) of workers and seamlessly introducing changes to the scheduling and execution of activities. These provisions enable the continuous improvement and adaption of activities, processes and management.

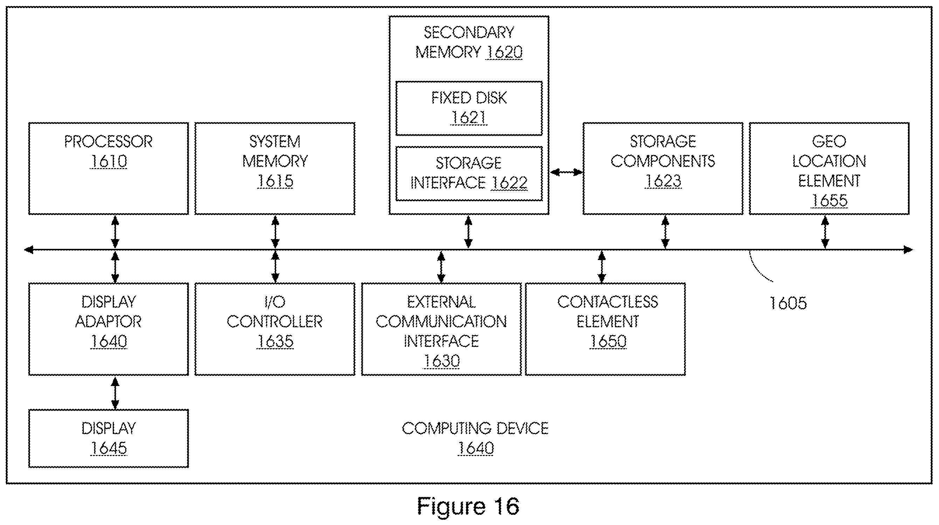

Figure 16 illustrates an example of a computing device 1600 in which various aspects of the disclosure may be implemented. The computing device 1600 may be embodied as any form of data processing device including a personal computing device (e.g., laptop or desktop computer), a server computer (which may be self-contained, physically distributed over a number of locations), a client computer, or a communication device, such as a mobile phone (e.g., cellular telephone), satellite phone, tablet computer, personal digital assistant or the like. Different embodiments of the computing device may dictate the inclusion or exclusion of various components or subsystems described below.

The computing device 1600 may be suitable for storing and executing computer program code. The various participants and elements in the previously described system diagrams may use any suitable number of subsystems or components of the computing device 1600 to facilitate the functions described herein. The computing device 1600 may include subsystems or components interconnected via a communication infrastructure 1605 (for example, a communications bus, a network, etc.). The computing device 1600 may include one or more processors 1610 and at least one memory component in the form of computer-readable media. The one or more processors 1610 may include one or more of: CPUs, graphical processing units (GPUs), microprocessors, field programmable gate arrays (FPGAs), application specific integrated circuits (ASICs) and the like. In some configurations, a number of processors may be provided and may be arranged to carry out calculations simultaneously. In some implementations various subsystems or components of the computing device 1600 may be distributed over a number of physical locations (e.g., in a distributed, cluster or cloud-based computing configuration) and appropriate software units may be arranged to manage and/or process data on behalf of remote devices.

The memory components may include system memory 1615, which may include read only memory (ROM) and random-access memory (RAM). A basic input/output system (BIOS) may be stored in ROM. System software may be stored in the system memory 1615 including operating system software. The memory components may also include secondary memory 1620. The secondary memory 1620 may include a fixed disk 1621, such as a hard disk drive, and, optionally, one or more storage interfaces 1622 for interfacing with storage components 1623, such as removable storage components (e.g., magnetic tape, optical disk, flash memory drive, external hard drive, removable memory chip, etc.), network attached storage components (e.g., NAS drives), remote storage components (e.g., cloud-based storage) or the like.

The computing device 1600 may include an external communications interface 1630 for operation of the computing device 1600 in a networked environment enabling transfer of data between multiple computing devices 1600 and/or the Internet. Data transferred via the external communications interface 1630 may be in the form of signals, which may be electronic, electromagnetic, optical, radio, or other types of signal. The external communications interface 1630 may enable communication of data between the computing device 1600 and other computing devices including servers and external storage facilities. Web services may be accessible by and/or from the computing device 1600 via the communications interface 1630.

The external communications interface 1630 may be configured for connection to wireless communication channels (e.g., a cellular telephone network, wireless local area network (e.g., using Wi-Fi^{™}), satellite-phone network, Satellite Internet Network, etc.) and may include an associated wireless transfer element, such as an antenna and associated circuitry. The external communications interface 1630 may include a subscriber identity module (SIM) in the form of an integrated circuit that stores an international mobile subscriber identity and the related key used to identify and authenticate a subscriber using the computing device 1600. One or more subscriber identity modules may be removable from or embedded in the computing device 1600.

The external communications interface 1630 may further include a contactless element 1650, which is typically implemented in the form of a semiconductor chip (or other data storage element) with an associated wireless transfer element, such as an antenna. The contactless element 1650 may be associated with (e.g., embedded within) the computing device 1600 and data or control instructions transmitted via a cellular network may be applied to the contactless element 1650 by means of a contactless element interface (not shown). The contactless element interface may function to permit the exchange of data and/or control instructions between computing device circuitry (and hence the cellular network) and the contactless element 1650. The contactless element 1650 may be capable of transferring and receiving data using a near field communications capability (or near field communications medium) typically in accordance with a standardised protocol or data transfer mechanism (e.g., ISO 14443/NFC). Near field communications capability may include a short-range communications capability, such as radiofrequency identification (RFID), Bluetooth^{™}, infra-red, or other data transfer capability that can be used to exchange data between the computing device 1600 and an interrogation device. Thus, the computing device 1600 may be capable of communicating and transferring data and/or control instructions via both a cellular network and near field communications capability.

The computer-readable media in the form of the various memory components may provide storage of computer-executable instructions, data structures, program modules, software units and other data. A computer program product may be provided by a computer-readable medium having stored computer-readable program code executable by the central processor 1610. A computer program product may be provided by a non-transient or non-transitory computer-readable medium, or may be provided via a signal or other transient or transitory means via the communications interface 1630.

Interconnection via the communication infrastructure 1605 allows the one or more processors 1610 to communicate with each subsystem or component and to control the execution of instructions from the memory components, as well as the exchange of information between subsystems or components. Peripherals (such as printers, scanners, cameras, or the like) and input/output (I/O) devices (such as a mouse, touchpad, keyboard, microphone, touch-sensitive display, input buttons, speakers and the like) may couple to or be integrally formed with the computing device 1600 either directly or via an I/O controller 1635. One or more displays 1645 (which may be touch-sensitive displays) may be coupled to or integrally formed with the computing device 1600 via a display or video adapter 1640.

The computing device 1600 may include a geographical location element 1655 which is arranged to determine the geographical location of the computing device 1600. The geographical location element 1655 may for example be implemented by way of a global positioning system (GPS), or similar, receiver module. In some implementations the geographical location element 1655 may implement an indoor positioning system, using for example communication channels such as cellular telephone or Wi-Fi^{™} networks and/or beacons (e.g., Bluetooth^{™} Low Energy (BLE) beacons, iBeacons^{™} etc.) to determine or approximate the geographical location of the computing device 1600. In some implementations, the geographical location element 1655 may implement inertial navigation to track and determine the geographical location of the communication device using an initial set point and inertial measurement data.

The foregoing description has been presented for the purpose of illustration; it is not intended to be exhaustive or to limit the invention to the precise forms disclosed. Persons skilled in the relevant art can appreciate that many modifications and variations are possible in light of the above disclosure.

Any of the steps, operations, components or processes described herein may be performed or implemented with one or more hardware or software units, alone or in combination with other devices. Components or devices configured or arranged to perform described functions or operations may be so arranged or configured through computer-implemented instructions which implement or carry out the described functions, algorithms, or methods. The computer-implemented instructions may be provided by hardware or software units. In one embodiment, a software unit is implemented with a computer program product comprising a non-transient or non-transitory computer-readable medium containing computer program code, which can be executed by a processor for performing any or all of the steps, operations, or processes described. Software units or functions described in this application may be implemented as computer program code using any suitable computer language such as, for example, Java^{™}, C++, or Perl^{™} using, for example, conventional or object-oriented techniques. The computer program code may be stored as a series of instructions, or commands on a non-transitory computer-readable medium, such as a random-access memory (RAM), a read-only memory (ROM), a magnetic medium such as a hard-drive, or an optical medium such as a CD-ROM. Any such computer-readable medium may also reside on or within a single computational apparatus, and may be present on or within different computational apparatuses within a system or network.

Flowchart illustrations and block diagrams of methods, systems, and computer program products according to embodiments are used herein. Each block of the flowchart illustrations and/or block diagrams, and combinations of blocks in the flowchart illustrations and/or block diagrams, may provide functions which may be implemented by computer readable program instructions. In some alternative implementations, the functions identified by the blocks may take place in a different order to that shown in the flowchart illustrations.

Some portions of this description describe the embodiments of the invention in terms of algorithms and symbolic representations of operations on information. These algorithmic descriptions and representations, such as accompanying flow diagrams, are commonly used by those skilled in the data processing arts to convey the substance of their work effectively to others skilled in the art. These operations, while described functionally, computationally, or logically, are understood to be implemented by computer programs or equivalent electrical circuits, microcode, or the like. The described operations may be embodied in software, firmware, hardware, or any combinations thereof.

The language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention set forth in any accompanying claims.

Finally, throughout the specification and any accompanying claims, unless the context requires otherwise, the word 'comprise' or variations such as 'comprises' or 'comprising' will be understood to imply the inclusion of a stated integer or group of integers but not the exclusion of any other integer or group of integers.

## Claims

1. A computer-implemented system for operations management in a workplace environment incorporating human resources in an automated environment, comprising:
a network of a plurality of modular shell components (210), wherein each shell component (210) is a self-contained functional unit customised from a generalised shell component for an application or context by the addition of plugin software components and wherein each shell component is configured to include data stores and to interface with plugin software components to autonomously manage data and decisions related to the operations of a resource or an activity in an automated environment, wherein:
at least one of the shell components (121) is configured for a human resource and the human-resource shell component provides activity scheduling and data management for a role of the human resource;
at least one of the shell components (122) is configured for a non-human resource for activity scheduling and data management of the non-human resource; and
at least one of the shell components (123) is configured for an activity to be carried out by a human resource or a non-human resource; and
wherein each shell component (210) includes a communication component (215) to communicate with one or more other shell components (210) to provide a scalable architecture.

2. The system of claim 1, wherein each shell component (210) reads state data of the resource or activity it represents and manages and controls its own data, and wherein the scalable architecture is an agent-based or an actor-based architecture.

3. The system of claim 1 or claim 2, wherein each shell component (210) is an individual software process that has a memory managed only by its individual software process and wherein each modular shell component runs in parallel with other modular shell components of the network and the modular shell components interact through messages.

4. The system of any one of the preceding claims, including one or more of the shell components (210) configured to act as an orchestrating shell component (124) coordinating other shell components in the network.

5. The system of any one of the preceding claims, the communication component (215) of a shell component is configured with a standard set of interaction protocols for communication with other shell components, wherein the interaction protocols are capable of running concurrently.

6. The system of any one of the preceding claims, wherein a human-resource shell component interfaces with a human via user interfaces that are represented by non-human resource shell components.

7. A shell component (210) for operations management in a workplace environment incorporating human resources in an automated environment, comprising:
a self-contained functional unit including a generalised set of core components (211, 212, 213, 214) configured to include data stores;
interfaces for plugin software components (221, 222, 223, 224) customisable to a specific application by configuring interfacing behaviour between the core components; and
a communications component (215) for providing communication to external systems and other shell components, and internal communications between the core components of the shell component;
wherein the shell component (210) is configurable to be one of:
a resource shell component for human resources (121) providing activity scheduling and data management of a role of the human resource;
a resource shell component for non-human system resources (122) for activity scheduling and management of the resource; or
an activity shell component (123) for activities to be carried out by a human resource or a non-human resource.

8. The shell component of claim 7, wherein the core components include:
an attribute component (211) for storing stable attribute data relating to the resource or activity;
a schedule component (212) for storing scheduling data relating to the future activities of the resource or activity;
an execution component (213) for storing volatile data relating to a current state of the resource or activity; and
a biography component (214) for storing data relating to past events of the resource or activity.

9. The shell component of claim 8, wherein the plugin software components (221, 222, 223, 224) are configured to control operations of the core components (211, 212, 213, 214) including:
scheduling and management of activities in the schedule component (212);
management of activity data and execution in the execution component (213);
collection and management of post-execution data in the biography component (214); and
analysis of biographic information to adjust attributes in the attribute component (211).

10. The shell component of claim 8 or claim 9, wherein the plugin software components (221, 222, 223, 224) include:
a scheduling plugin component (221) to interface between the attribute component (211) and the scheduling component (212);
an execution plugin component (222) to interface between the scheduling component (212) and the execution component (213);
a reflection plugin component (223) to interface between the execution component (213) and the biography component (214); and
an analysis plugin component (224) to interface between the biography component (214) and the attribute component (211).

11. The shell component of any one of claims 8 to 10, wherein the attribute component (211) contains static information about a resource that is required for execution and scheduling decisions and is accessible to any of the plugin software components.

12. The shell component of any one of claims 7 to 11, wherein the shell component (210) is configured to provide a self-improvement feedback loop due to data flow between the core components (211, 212, 213, 214).

13. A computer-implemented method for operations management in a workplace environment incorporating human resources into an automated environment, comprising:
providing (311) a network of a plurality of modular shell components (210), wherein each shell component (210) is a self-contained functional unit customised from a generalised shell component for an application or context by the addition of plugin software components and wherein each shell component (210) is configured to include data stores and to interface with plugin software components to autonomously manage data and decisions related to the operations of a resource or an activity in an automated environment, and wherein each shell component (210) communicates with one or more other shell components (210) to provide a scalable architecture, including:
configuring (312) at least one of the shell components (121) for a human resource and the human-resource shell component provides activity scheduling and data management for a role of the human resource;
configuring (313) at least one of the shell components (122) is configured for a non-human resource for activity scheduling and data management of the non-human resource; and
configuring (314) at least one of the shell components (123) is configured for an activity to be carried out by a human resource or a non-human resource.

14. The method of claim 13, including configuring (315) one or more shell component (210) to act as an orchestrating shell component (124) coordinating other shell components in a workplace.

15. The method of claim 13 or claim 14, wherein the method includes customising a generalised shell component (210) to form of a self-contained functional unit for an application or context by using plugin software components to the generalised shell component, wherein the generalised shell component includes a generalised set of core components configured to be data stores for attribute data, scheduled data, present executing data, and past data.

## Patentansprüche

1. Computerimplementiertes System für eine Betriebsverwaltung in einer Arbeitsplatzumgebung, in der menschliche Ressourcen in eine automatisierte Umgebung eingebunden werden, umfassend:
ein Netzwerk einer Vielzahl von modularen Shell-Komponenten (210), wobei jede Shell-Komponente (210) eine eigenständige Funktionseinheit ist, die aus einer generalisierten Shell-Komponente für eine Anwendung oder einen Kontext durch das Hinzufügen von Plugin-Softwarekomponenten kundenspezifisch angepasst wird, und wobei jede Shell-Komponente konfiguriert ist, um Datenspeicher zu beinhalten und um über eine Schnittstelle mit Plugin-Softwarekomponenten verknüpft zu werden, um Daten und Entscheidungen autonom zu verwalten, die sich auf die Operationen einer Ressource oder eine Aktivität in einer automatisierten Umgebung beziehen, wobei:
mindestens eine der Shell-Komponenten (121) für eine menschliche Ressource konfiguriert ist und die Shell-Komponente für menschliche Ressourcen eine Aktivitätsplanung und eine Datenverwaltung für eine Rolle der menschlichen Ressource bereitstellt;
mindestens eine der Shell-Komponenten (122) für eine nicht-menschliche Ressource für eine Aktivitätsplanung und eine Datenverwaltung der nicht-menschlichen Ressource konfiguriert ist; und
mindestens eine der Shell-Komponenten (123) für eine Aktivität konfiguriert ist, die von einer menschlichen Ressource oder einer nicht-menschlichen Ressource auszuführen ist; und
wobei jede Shell-Komponente (210) eine Kommunikationskomponente (215) zum Kommunizieren mit einer oder mehreren anderen Shell-Komponenten (210) beinhaltet, um eine anpassbare Architektur bereitzustellen.

2. System nach Anspruch 1, wobei jede Shell-Komponente (210) Zustandsdaten der Ressource oder der Aktivität liest, die sie repräsentiert und verwaltet, und ihre eigenen Daten steuert, und wobei die anpassbare Architektur eine agentenbasierte oder eine aktorbasierte Architektur ist.

3. System nach Anspruch 1 oder Anspruch 2, wobei jede Shell-Komponente (210) ein individueller Softwareprozess ist, der einen Arbeitsspeicher aufweist, der nur durch seinen individuellen Softwareprozess verwaltet wird und wobei jede modulare Shell-Komponente parallel zu anderen modularen Shell-Komponenten des Netzwerks ausgeführt wird und wobei die modularen Shell-Komponenten durch Nachrichten interagieren.

4. System nach einem der vorhergehenden Ansprüche, das eine oder mehrere Shell-Komponenten (210) beinhaltet, die konfiguriert sind, um als eine orchestrierende Shell-Komponente (124) zu funktionieren, die andere Shell-Komponenten in dem Netzwerk koordiniert.

5. System nach einem der vorhergehenden Ansprüche, wobei die Kommunikationskomponente (215) einer Shell-Komponente mit einem Standardsatz von Interaktionsprotokollen für eine Kommunikation mit anderen Shell-Komponenten konfiguriert ist, wobei die Interaktionsprotokolle in der Lage sind, gleichzeitig ausgeführt zu werden.

6. System nach einem der vorhergehenden Ansprüche, wobei eine Shell-Komponente für menschliche Ressourcen über Benutzeroberflächen, die durch Shell-Komponente für nicht-menschliche Ressourcen repräsentiert werden, mit einem menschlichen Benutzer verknüpft werden.

7. Shell-Komponente (210) für eine Betriebsverwaltung in einer Arbeitsplatzumgebung, in der menschliche Ressourcen in eine automatisierte Umgebung eingebunden werden, umfassend:
eine eigenständige Funktionseinheit, die eine generalisierte Gruppe von Kernkomponenten (211, 212, 213, 214) beinhaltet, die konfiguriert sind, um Datenspeicher zu beinhalten;
Schnittstellen für Plugin-Softwarekomponenten (221, 222, 223, 224), die kundenspezifisch auf eine spezifische Anwendung anpassbar sind, indem ein Verknüpfungsverhalten zwischen den Kernkomponenten konfiguriert wird; und
eine Kommunikationskomponente (215) zum Bereitstellen einer Kommunikation mit externen Systemen und anderen Shell-Komponenten und von internen Kommunikationen zwischen den Kernkomponenten der Shell-Komponente;
wobei die Shell-Komponente (210) konfigurierbar ist, um eine zu sein von:
einer Ressourcen-Shell-Komponente für menschliche Ressourcen (121), die eine Aktivitätsplanung und eine Datenverwaltung für eine Rolle der menschlichen Ressource bereitstellt;
einer Ressourcen-Shell-Komponente für nicht-menschliche Ressourcen (122) für eine Aktivitätsplanung und eine Verwaltung der Ressource; oder
eine Aktivitäts-Shell-Komponenten (123) für Aktivitäten, die von einer menschlichen Ressource oder einer nicht-menschlichen Ressource auszuführen sind.

8. Shell-Komponente nach Anspruch 7, wobei die Kernkomponenten beinhalten:
eine Attributkomponente (211) zum Speichern von stabilen Attributdaten, die sich auf die Ressource oder die Aktivität beziehen;
eine Planungskomponente (212) zum Speichern von Planungsdaten, die sich auf zukünftige Aktivitäten der Ressource oder der Aktivität beziehen;
eine Ausführungskomponente (213) zum Speichern von flüchtigen Daten, die sich auf einen aktuellen Zustand der Ressource oder der Aktivität beziehen; und
eine Biografiekomponente (214) zum Speichern von Planungsdaten, die sich auf vergangene Ereignisse der Ressource oder der Aktivität beziehen.

9. Shell-Komponente nach Anspruch 8, wobei die Plugin-Softwarekomponenten (221, 222, 223, 224) konfiguriert sind zum Steuern von Operationen der Kernkomponenten (211, 212, 213, 214), was beinhaltet:
Planung und Verwaltung von Aktivitäten in der Planungskomponente (212);
Verwaltung von Aktivitätsdaten und -ausführung in der Ausführungskomponente (213);
Sammlung und Verwaltung von Daten nach der Ausführung in der Biografiekomponente (214); und
Analyse von biografischen Informationen, um Attribute in der Attributkomponente (211) anzupassen.

10. Shell-Komponente nach Anspruch 8 oder Anspruch 9, wobei die Plugin-Softwarekomponenten (221, 222, 223, 224) beinhalten:
eine Plugin-Planungskomponente (221), um eine Verknüpfung über eine Schnittstelle zwischen der Attributkomponente (211) und der Planungskomponente (212) herzustellen;
eine Plugin-Ausführungskomponente (222), um eine Verknüpfung über eine Schnittstelle zwischen der Planungskomponente (212) und der Ausführungskomponente (213) herzustellen;
eine Plugin-Spiegelungskomponente (223), um eine Verknüpfung über eine Schnittstelle zwischen der Ausführungskomponente (213) und der Biografiekomponente (214) herzustellen; und
eine Plugin-Analysekomponente (224), um eine Verknüpfung über eine Schnittstelle zwischen der Biografiekomponente (214) und der Attributkomponente (211) herzustellen.

11. Shell-Komponente nach einem der Ansprüche 8 bis 10, wobei die Attributkomponente (211) statische Informationen über eine Ressource enthält, die für Ausführungs- und Planungsentscheidungen erforderlich sind und für jede der Plugin-Softwarekomponenten zugänglich sind.

12. Shell-Komponente nach einem der Ansprüche 7 bis 11, wobei die Shell-Komponente (210) konfiguriert ist zum Bereitstellen einer Selbstoptimierungsrückkopplungsschleife aufgrund eines Datenflusses zwischen den Kernkomponenten (211, 212, 213, 214).

13. Computerimplementiertes Verfahren für eine Betriebsverwaltung in einer Arbeitsplatzumgebung, in der menschliche Ressourcen in eine automatisierte Umgebung eingebunden werden, umfassend:
Bereitstellen (311) eines Netzwerks einer Vielzahl von modularen Shell-Komponenten (210), wobei jede Shell-Komponente (210) eine eigenständige Funktionseinheit ist, die aus einer generalisierten Shell-Komponente für eine Anwendung oder einen Kontext durch das Hinzufügen von Plugin-Softwarekomponenten kundenspezifisch angepasst wird, und wobei jede Shell-Komponente (210) konfiguriert ist, um Datenspeicher zu beinhalten und um über eine Schnittstelle mit Plugin-Softwarekomponenten verknüpft zu werden, um Daten und Entscheidungen autonom zu verwalten, die sich auf die Operationen einer Ressource oder eine Aktivität in einer automatisierten Umgebung beziehen, und wobei jede Shell-Komponente (210) mit einer oder mehreren anderen Shell-Komponenten (210) kommuniziert, um eine anpassbare Architektur bereitzustellen, was beinhaltet:
Konfigurieren (312) mindestens einer der Shell-Komponenten (121) für eine menschliche Ressource und wobei die Shell-Komponente für menschliche Ressourcen eine Aktivitätsplanung und eine Datenverwaltung für eine Rolle der menschlichen Ressource bereitstellt;
Konfigurieren (313) mindestens einer der Shell-Komponenten (122), die für eine nicht-menschliche Ressource konfiguriert sind, für eine Aktivitätsplanung und eine Datenverwaltung der nicht-menschlichen Ressource; und
Konfigurieren (314) mindestens einer der Shell-Komponenten (123) für eine Aktivität, die von einer menschlichen Ressource oder einer nicht-menschlichen Ressource auszuführen ist.

14. Verfahren nach Anspruch 13, das ein Konfigurieren (315) von einer oder mehreren Shell-Komponenten (210) beinhaltet, um als eine orchestrierende Shell-Komponente (124) zu funktionieren, die andere Shell-Komponenten an einem Arbeitsplatz koordiniert.

15. Verfahren nach Anspruch 13 oder Anspruch 14, wobei das Verfahren ein kundenspezifisches Anpassen einer generalisierten Shell-Komponente (210) umfasst, um eine eigenständige Funktionseinheit für eine Anwendung oder einen Kontext zu bilden, indem Plugin-Softwarekomponenten für eine generalisierte Shell-Komponente verwendet wird, wobei die generalisierte Shell-Komponente eine generalisierte Gruppe von Kernkomponenten beinhaltet, die konfiguriert sind, um Datenspeicher für Attributdaten, Planungsdaten, aktuell ausgeführte Daten und vergangene Daten zu sein.

## Revendications

1. Système mis en œuvre par ordinateur pour la gestion des opérations dans un environnement de milieu de travail incorporant des ressources humaines dans un environnement automatisé, comprenant :
- un réseau d'une pluralité de composants conteneurs modulaires (210), où chaque composant conteneur (210) est une unité fonctionnelle autonome personnalisée à partir d'un composant conteneur généralisé pour une application ou un contexte par l'ajout de composants logiciels de module d'extension et où chaque composant conteneur est configuré pour inclure des magasins de données et pour faire interface avec des composants logiciels de module d'extension pour gérer de manière autonome des données et des décisions liées aux opérations d'une ressource ou d'une activité dans un environnement automatisé, dans lequel :
au moins l'un des composants conteneurs (121) est configuré pour une ressource humaine et le composant conteneur de ressource humaine fournit une planification d'activité et une gestion de données pour un rôle de la ressource humaine ;
au moins l'un des composants conteneurs (122) est configuré pour une ressource non humaine pour une planification d'activité et une gestion de données de la ressource non humaine ; et
au moins l'un des composants conteneurs (123) est configuré pour une activité à réaliser par une ressource humaine ou une ressource non humaine ; et
dans lequel chaque composant conteneur (210) comprend un composant de communication (215) pour communiquer avec un ou plusieurs autres composants conteneurs (210) afin de fournir une architecture évolutive.

2. Système selon la revendication 1, dans lequel chaque composant conteneur (210) lit des données d'état de la ressource ou de l'activité qu'il représente et gère et commande ses propres données, et dans lequel l'architecture évolutive est une architecture à base d'agents ou à base d'acteurs.

3. Système selon la revendication 1 ou 2, dans lequel chaque composant conteneur (210) est un processus logiciel individuel qui a une mémoire gérée uniquement par son processus logiciel individuel et dans lequel chaque composant conteneur modulaire fonctionne en parallèle avec d'autres composants conteneurs modulaires du réseau et les composants conteneurs modulaires interagissent par des messages.

4. Système selon l'une quelconque des revendications précédentes, comprenant un ou plusieurs des composants conteneurs (210) configurés pour agir en tant que composant conteneur d'orchestration (124) coordonnant d'autres composants conteneurs dans le réseau.

5. Système selon l'une quelconque des revendications précédentes, le composant de communication (215) d'un composant conteneur est configuré avec un ensemble standard de protocoles d'interaction pour la communication avec d'autres composants conteneurs, où les protocoles d'interaction sont capables de fonctionner simultanément.

6. Système selon l'une quelconque des revendications précédentes, dans lequel un composant conteneur de ressource humaine fait interface avec un humain via des interfaces utilisateur qui sont représentées par des composants conteneurs de ressource non humaine.

7. Composant conteneur (210) pour la gestion des opérations dans un environnement de milieu de travail incorporant des ressources humaines dans un environnement automatisé, comprenant :
- une unité fonctionnelle autonome comprenant un ensemble généralisé de composants de base (211, 212, 213, 214) configurés pour inclure des magasins de données ;
- des interfaces pour des composants logiciels de module d'extension (221, 222, 223, 224) personnalisables pour une application spécifique en configurant le comportement d'interface entre les composants de base ; et
- un composant de communication (215) pour fournir la communication à des systèmes externes et d'autres composants conteneurs, et des communications internes entre les composants de base du composant conteneur ;
dans lequel le composant conteneur (210) peut être configuré pour être l'un parmi :
- un composant conteneur de ressource pour des ressources humaines (121) fournissant une planification d'activité et une gestion de données d'un rôle de la ressource humaine ;
- un composant conteneur de ressource pour des ressources de système non humaines (122) pour une planification d'activité et une gestion de la ressource ; ou
- un composant conteneur d'activité (123) pour des activités à réaliser par une ressource humaine ou une ressource non humaine.

8. Composant conteneur selon la revendication 7, dans lequel les composants de base comprennent :
- un composant d'attribut (211) pour stocker des données d'attribut stables relatives à la ressource ou à l'activité ;
- un composant de planification (212) pour stocker des données de planification relatives aux activités futures de la ressource ou de l'activité ;
- un composant d'exécution (213) pour stocker des données volatiles relatives à un état actuel de la ressource ou de l'activité ; et
- un composant de biographie (214) pour stocker des données relatives aux événements passés de la ressource ou de l'activité.

9. Composant conteneur selon la revendication 8, dans lequel les composants logiciels de module d'extension (221, 222, 223, 224) sont configurés pour commander les opérations des composants de base (211, 212, 213, 214), comprenant :
- la planification et la gestion d'activités dans le composant de planification (212) ;
- la gestion des données et de l'exécution d'activité dans le composant d'exécution (213) ;
- la collecte et la gestion de données post-exécution dans le composant de biographie (214) ; et
- l'analyse d'informations biographiques pour ajuster les attributs dans le composant d'attribut (211).

10. Composant conteneur selon la revendication 8 ou 9, dans lequel les composants logiciels de module d'extension (221, 222, 223, 224) comprennent :
- un composant de module d'extension de planification (221) pour faire l'interface entre le composant d'attribut (211) et le composant de planification (212) ;
- un composant de module d'extension d'exécution (222) pour faire l'interface entre le composant de planification (212) et le composant d'exécution (213) ;
- un composant de module d'extension de réflexion (223) pour faire l'interface entre le composant d'exécution (213) et le composant de biographie (214) ; et
- un composant de module d'extension d'analyse (224) pour faire l'interface entre le composant de biographie (214) et le composant d'attribut (211).

11. Composant conteneur selon l'une quelconque des revendications 8 à 10, dans lequel le composant d'attribut (211) contient des informations statiques sur une ressource qui est nécessaire pour des décisions d'exécution et de planification et qui est accessible à l'un des composants logiciels de module d'extension.

12. Composant conteneur selon l'une quelconque des revendications 7 à 11, dans lequel le composant conteneur (210) est configuré pour fournir une boucle de rétroaction d'auto-amélioration en raison du flux de données entre les composants de base (211, 212, 213, 214).

13. Procédé mis en œuvre par ordinateur pour la gestion des opérations dans un environnement de milieu de travail incorporant des ressources humaines dans un environnement automatisé, comprenant :
- la fourniture (311) d'un réseau d'une pluralité de composants conteneurs modulaires (210), où chaque composant conteneur (210) est une unité fonctionnelle autonome personnalisée à partir d'un composant conteneur généralisé pour une application ou un contexte par l'ajout de composants logiciels de module d'extension et où chaque composant conteneur (210) est configuré pour inclure des magasins de données et pour faire interface avec des composants logiciels de module d'extension pour gérer de manière autonome des données et des décisions liées aux opérations d'une ressource ou d'une activité dans un environnement automatisé, et où chaque composant conteneur (210) communique avec un ou plusieurs autres composants conteneurs (210) pour fournir une architecture évolutive, comprenant :
la configuration (312) d'au moins l'un des composants conteneurs (121) pour une ressource humaine et le composant conteneur de ressource humaine fournit une planification d'activité et une gestion de données pour un rôle de la ressource humaine ;
la configuration (313) d'au moins l'un des composants conteneurs (122) pour une ressource non humaine pour une planification d'activité et une gestion de données de la ressource non humaine ; et
la configuration (314) d'au moins l'un des composants conteneurs (123) pour une activité à réaliser par une ressource humaine ou une ressource non humaine.

14. Procédé selon la revendication 13, comprenant la configuration (315) d'un ou de plusieurs composants conteneurs (210) pour agir en tant que composant conteneur d'orchestration (124) coordonnant d'autres composants conteneurs dans un milieu de travail.

15. Procédé selon la revendication 13 ou 14, dans lequel le procédé comprend la personnalisation d'un composant conteneur généralisé (210) pour former une unité fonctionnelle autonome pour une application ou un contexte en utilisant des composants logiciels de module d'extension pour le composant conteneur généralisé, où le composant conteneur généralisé comprend un ensemble généralisé de composants de base configurés pour être des magasins de données pour des données d'attribut, des données planifiées, des données d'exécution actuelles et des données passées.
